# EUROPÄISCHE PATENTSCHRIFT

(11) **EP 1 740 344 B1**
(45) Veröffentlichungstag und Bekanntmachung des Hinweises auf die Patenterteilung: **28.11.2012**
(21) Anmeldenummer: 05736892.0
(22) Anmeldetag: 28.04.2005
(51) Int. Cl.: B23P 19/06, B21J 9/02, B21J 15/12, F16B 37/06

(54) **VERFAHREN UND VORRICHTUNG ZUR ANBRINGUNG EINES BEFESTIGUNGSELEMENTS AN EIN BAUTEIL, INSBESONDERE AN EIN BLECHTEIL**
METHOD AND DEVICE FOR MOUNTING A FASTENING ELEMENT ON A PART, PARTICULARLY A SHEET METAL PART
PROCÉDÉ ET DISPOSITIF PERMETTANT D'APPLIQUER UN ÉLÉMENT DE FIXATION SUR UN COMPOSANT, EN PARTICULIER SUR UNE PIÈCE EN TÔLE

(30) Priorität: 28.04.2004 DE 102004020675
(43) Veröffentlichungstag der Anmeldung: 10.01.2007
(73) Patentinhaber: PROFIL Verbindungstechnik GmbH & Co. KG, 61381 Friedrichsdorf (DE)
(72) Erfinder: DIEHL, Oliver, 61350 Bad Homburg v.d.H. (DE); HUMPERT, Richard, 61191 Rosbach v.d.H. (DE)
(74) Vertreter: Manitz, Finsterwald & Partner GbR
(86) Internationale Anmeldenummer: PCT/EP2005/004589
(87) Internationale Veröffentlichungsnummer: WO 2005/105365

(56) Entgegenhaltungen:
- EP-A- 0 539 793
- WO-A-00/76688
- WO-A-03/029667
- DE-A1- 10 061 635
- DE-C- 512 924
- US-A- 1 089 281
- US-A- 1 517 079
- US-A- 1 787 076
- US-A- 2 729 884
- US-A- 2 739 726
- US-A- 2 771 207
- US-A- 4 459 840
- US-A- 4 974 274
- DATABASE WPI Section PQ, Week 200405 Derwent Publications Ltd., London, GB; Class P52, AN 2004-050375 XP002340114 -& SE 521 812 C2 (HEINO T) 9. Dezember 2003 (2003-12-09)
- PATENT ABSTRACTS OF JAPAN Bd. 1995, Nr. 10, 30. November 1995 (1995-11-30) -& JP 07 171651 A (HITACHI LTD), 11. Juli 1995 (1995-07-11)
- DATABASE WPI Section Ch, Week 198150 Derwent Publications Ltd., London, GB; Class M21, AN 1981-92689D XP002340115 -& SU 812 413 A (KHARK AVIATION INST) 16. März 1981 (1981-03-16)

## Beschreibung

Die vorliegende Erfindung betrifft ein Verfahren und Vorrichtung zur Anbringung eines Befestigungselements, mit einem Kopfteil mit einem rohrförmigen Nietabschnitt, der konzentrisch zu einer Symmetrieachse des Befestigungselementes bzw. eines Befestigungsabschnittes des Befestigungselementes angeordnet ist und über eine sich in radialer Richtung erstreckende Anlagefläche in den Kopfteil übergeht, an ein vorgelochtes Bauteil, beispielsweise ein Blechteil, wobei der Nietabschnitt durch das Loch im Blechteil hindurchgeführt und der Nietabschnitt umgebördelt wird, wodurch das Bauteil im Bereich des Loches zwischen der Anlagefläche und dem umgebördelten Nietabschnitt geklemmt wird. Die vorliegende Erfindung betrifft außerdem ähnliche Verfahren und Vorrichtungen, die geeignet sind, ein Befestigungselement an ein nicht vorgelochtes Bauteil anzubringen, wobei das Befestigungselement ausgenutzt wird, um das Loch im Bauteil herzustellen.

Verfahren und Vorrichtungen der oben genannten Art sind auf dem Gebiet der Anbringung von Befestigungselementen an Blechteilen bestens bekannt. Beispielsweise beschreibt das deutsche Patent 3447006 wie ein Befestigungselement, das im Handel unter der Bezeichnung SBF von der Firma Profil Verbindungstechnik GmbH & Co. KG erhältlich ist, selbststanzend in ein Blechteil eingebracht werden kann. Ferner beschreibt das europäische Patent 539793 das so genannte Klemmlochnietverfahren, mit dem Elemente, insbesondere so genannte RSN-Elemente und RND-Elemente (EP 1116891) der Firma Profil Verbindungstechnik GmbH & Co. KG, in Blechteile eingebracht werden können.

Um die bisher bekannten Verfahren durchzuführen, kommen hauptsächlich Pressen mit erheblichen Presskräften zur Anwendung, die für die Anbringung der Befestigungselemente an Blechteilen sorgen, und zwar insbesondere dann, wenn das Blechteil auch eine bestimmte Formgebung in der Presse erhalten soll. Nicht nur Elemente der Firma Profil Verbindungstechnik GmbH & Co. KG werden auf diese Art und Weise an Blechteilen befestigt, sondern auch eine Reihe von weiteren Befestigungselementen von anderen Wettbewerbern. Es ist auch bekannt, anstatt eine Presse für die Anbringung der Befestigungselemente zu verwenden, diese in C-Gestellen und/oder mittels Robotern an Blechteilen zu befestigen, wobei in beiden Fällen entsprechende Kraft erzeugenden Vorrichtungen vorhanden sein müssen, die oft Kräfte in zweistelliger Tonnenhöhe erzeugen müssen.

Mit solchen Vorrichtungen werden die Befestigungselemente in einem Hub an das Blechteil angebracht, das Verfahren läuft also relativ schnell ab.

Es gibt aber in kleineren Werkstätten eine Vielzahl von möglichen Anwendungen oder für die Herstellung von kleineren Serien, wo keine schwereren Pressen oder die anderen genannten Einrichtungen (C-Gestell oder Roboter) verfügbar sind, entweder weil die entsprechenden Betriebe keine solchen Einrichtungen besitzen oder weil diese anderweitig ausgelastet sind.

Die JP 07 171651 bildet den nächstliegenden Stand der Technik gegenüber dem Gegenstand der unabhängigen Ansprüche 1, 15, 16 und 26. Sie offenbart die Merkmale der Oberbegriffe dieser Ansprüche.

Weiterer Stand der Technik wird in den Druckschriften: DATABASE WPI Section PQ, Week 200405 Thomson Scientific, London, GB; Class P52, AN 2004-050375 XP002340114 -& SE 521 812 C2 (Heino T) 9. Dezember 2003 sowie US 4,459,840A offenbart.

Es ist deshalb die Aufgabe der vorliegenden Erfindung, zuverlässige Verfahren und Vorrichtungen vorzuschlagen, die im Stande sind, Befestigungselemente der eingangs genannten Art an Blechteilen anzubringen, ohne dass hierzu erhebliche Kräfte aufgewendet werden müssen, so dass Betriebe auch ohne große Investitionen in relativ schwere Einrichtungen im Stande sind, Befestigungselemente an Bauteilen, insbesondere an Blechteilen, zuverlässig anzubringen, wobei das erfindungsgemäße Verfahren und die erfindungsgemäße Vorrichtung für eine Vielzahl verschiedener Befestigungselemente verwendet werden können.

Zur Lösung dieser Aufgabe wird gemäß der Erfindung ein Verfahren der eingangs genannten Art vorgesehen, das sich dadurch auszeichnet, dass ein eine Matrizenform zur fortschreitenden Umbördelung des Nietabschnitts aufweisendes zweites Werkzeug in eine zur Symmetrieachse des Befestigungselements koaxiale Stellung gebracht wird und mit einem zur Symmetrieachse geneigten und um die Symmetrieachse gedrehten dritten Werkzeug auf eine der Matrizenform abgewandte Stirnseite des zweiten Werkzeugs gedrückt wird, wobei eine relative axiale Zustellbewegung zwischen dem ersten, den Kopfteil aufnehmenden Werkzeug und dem dritten, das zweite Werkzeug mitbewegende Werkzeug vorgenommen wird, bis der Nietabschnitt vollständig umgebördelt ist.

Erfindungsgemäß wird anstelle einer großen, schnell wirkenden Kraft eine wesentlich geringere Kraft verwendet, die lokal auf das Befestigungselement bzw. dessen Nietabschnitt einwirkt, und zwar über eine vergleichsweise lange Zeit (die aber ohne weiteres im Sekundenbereich liegen kann), wobei die Kraft progressiv um die Symmetrieachse des Befestigungselements bewegt wird und lokal auf das Befestigungselement bzw. den Nietabschnitt bzw. das Blechteil einwirkt, bis die Umbördelung des Nietabschnitts vollendet ist. Dadurch, dass die verwendete Kraft im Vergleich zu den bisher verwendeten Kräften deutlich geringer oder höher ausfällt, ist die zur Durchführung des Verfahrens benötigte Vorrichtung wesentlich weniger belastet und kann entsprechend leichter und kompakter gebaut werden und verbraucht noch weniger Material als bisher erforderlich war. Ferner kann beim Durchführen des Verfahrens mit Matrizen gearbeitet werden, die mit den für die entsprechenden Elemente bisher verwendeten Matrizen identisch sind oder unwesentlich abgeändert wurden, so dass bewährte und in der Praxis erprobte Systeme auch mit dem neuen Verfahren und der neuen Vorrichtung weiterhin verwendet werden können. Eine erste erfindungsgemäße Lösung der oben gestellten Aufgabe sieht ein Verfahren der eingangs genannten Art vor, dass sich dadurch auszeichnet, dass der Kopfteil des Befestigungselements in einen Ausschnitt eines ersten Werkzeugs aufgenommen wird und ein eine Matrizenform zur fortschreitenden Umbördelung des Nietabschnitts aufweisendes zweites Werkzeug in eine zur Symmetrieachse des Befestigungselements geneigte Stellung um die Symmetrieachse des Befestigungselements gedreht wird und gleichzeitig eine relative axiale Zustellbewegung zwischen dem den Kopfteil aufnehmenden Werkzeug und dem die Matrizenform aufweisenden Werkzeug vorgenommen wird, bis der Nietabschnitt vollständig umgebördelt ist.

Besonders bevorzugte Ausführungsform des Verfahrens gehen aus den Patentansprüchen 2 bis 14 hervor.

Eine weiteres Beispiel einer Lösung der oben gestellten Aufgabe sieht ein Verfahren der eingangs genannten Art vor, dass sich dadurch auszeichnet, dass der Kopfteil des Befestigungselements in einen Ausschnitt eines ersten Werkzeugs aufgenommen wird und ein eine Matrizenform zur fortschreitenden Umbördelung des Nietabschnitts aufweisendes zweites Werkzeug in einer zur Symmetrieachse des Befestigungselements koaxialen Stellung gebracht wird und mit einem zur Symmetrieachse geneigten und um die Symmetrieachse gedrehten dritten Werkzeug auf eine der Matrizenform abgewandte Stirnseite des zweiten Werkzeugs gedrückt wird, wobei eine relative axiale Zustellbewegung zwischen dem ersten den Kopfteil aufnehmenden Werkzeug und dem dritten das zweite Werkzeug mitbewegende Werkzeug vorgenommen wird, bis der Nietabschnitt vollständig umgebördelt ist.

Auch dieses Verfahren hat die gleichen Vorteile wie oben im Zusammenhang mit der ersten Variante der erfindungsgemäßen Lösung angegeben sind.

Eine zweites weiteres Beispiel einer Lösung der oben gestellten Aufgabe sieht ein Verfahren der eingangs genannten Art vor, dass sich dadurch auszeichnet, dass der Nietabschnitt des Befestigungselements zumindest im Wesentlichen in Richtung der Symmetrieachse auf eine zur fortschreitenden Umbördelung des Nietabschnitts ausgelegte Matrize mittels eines in einer zur Symmetrieachse des Befestigungselements geneigten Stellung angeordneten, um die Symmetrieachse des Befestigungselements herum drehbaren und auf einer dem Nietabschnitt abgewandten Stirnseite des Kopfteils gedrückten Werkzeugs gedrückt wird und gleichzeitig eine relative axiale Zustellbewegung zwischen dem auf den Kopfteil einwirkenden Werkzeug und der Matrize vorgenommen wird, bis der Nietabschnitt vollständig umgebördelt ist.

Auch dieses Verfahren hat die gleichen Vorteile wie oben im Zusammenhang mit der ersten Variante der erfindungsgemäßen Lösung angegeben sind.

Eine drittes Beispiel einer Lösung der oben gestellten Aufgabe sieht ein Verfahren der eingangs genannten Art vor, dass sich dadurch auszeichnet, dass der Kopfteil des Befestigungselements in einen Ausschnitt eines ersten Werkzeugs aufgenommen wird und ein zweites Werkzeug mit mindestens einem um eine schräg zur Symmetrieachse drehbaren Rotationskörper zur fortschreitenden Umbördelung des Nietabschnitts vorgesehen ist, wobei zu diesem Zweck das zweite Werkzeug um die Symmetrieachse gedreht wird und gleichzeitig eine relative axiale Zustellbewegung zwischen dem den Kopfteil aufnehmenden ersten Werkzeug und dem zweiten Werkzeug vorgenommen wird, bis der Nietabschnitt vollständig umgebördelt ist.

Auch dieses Verfahren hat die gleichen Vorteile wie oben im Zusammenhang mit der ersten Variante der erfindungsgemäßen Lösung angegeben sind.

Eine weitere Lösung der oben gestellten Aufgabe sieht ein Verfahren der eingangs genannten Art vor, dass sich dadurch auszeichnet, dass das Bauteil über eine Nietrnatrize angeordnet wird und durch das Ausüben einer lokalen Kraft an den Kopfteil des Befestigungselements, die in Kreisen um die mittlere Symmetrieachse herum bewegt wird oder durch Ausüben einer solchen Kraft an die Matrize, bei gleichzeitiger Durchführung einer relativen axialen Zustellbewegung zwischen dem die Kraft ausübenden Werkzeug und der Matrizen vorgenommen wird, der Nietabschnitt durch das Bauteil hindurch gedrückt wird und anschließend umgebördelt wird.

Weitere bevorzugte Verfahren und Vorrichtungen gehen aus den weiteren Patentansprüchen sowie der nachfolgenden Beschreibung hervor.

Die Erfindung wird nachfolgend unter Bezugnahme auf die Zeichnung und anhand von Ausführungsbeispielen näher erläutert, in der Zeichnung zeigen:
- Fig. 1A: eine erstes Beispiel einer Anbringung eines an sich bekannten Befestigungselements an ein Blechteil gerade vor Beginn der Umbördelung des Nietabschnitts,
- Fig. 1B: eine Darstellung entsprechend der Fig. 1 jedoch gerade am Ende der Umbördelung des Nietabschnitts,
- Fig. 2A und 2B: Figuren entsprechend den Fig. 1A und 1B jedoch von dem erfindungsgemäßen Verfahren bzw. der erfindungsgemäßen Vorrichtung,
- Fig. 3A und 3B: Figuren entsprechend den Fig. 1A und 1B jedoch von einer weiteren Variante eines beispielhaften Verfahrens bzw. einer beispielhaften Vorrichtung,
- Fig. 4A und 4B: Figuren entsprechend den Fig. 1A und 1B jedoch von einer anderen Variante eines beispielhaften Verfahrens bzw. einer beispielhaften Vorrichtung,
- Fig. 5A, 5B; 6A, 6B; 7A, 7B; und 8A,8B: modifizierte ebenfalls beispielhafte Versionen des Verfahrens bzw. der Vorrichtung der Fig. 4A und 4B und
- Fig. 9A, 9B; 10A und 10B: Figuren entsprechend den Fig. 1A und 1B jedoch von zwei "selbststanzenden" Varianten des beispielhaften Verfahrens bzw. der erfindungsgemäßen Vorrichtung.
- Fig. 11 A, 11 Bund 12A, 12B: Figuren, die weitere erfindungsgemäße Ausführungsformen darstellen.

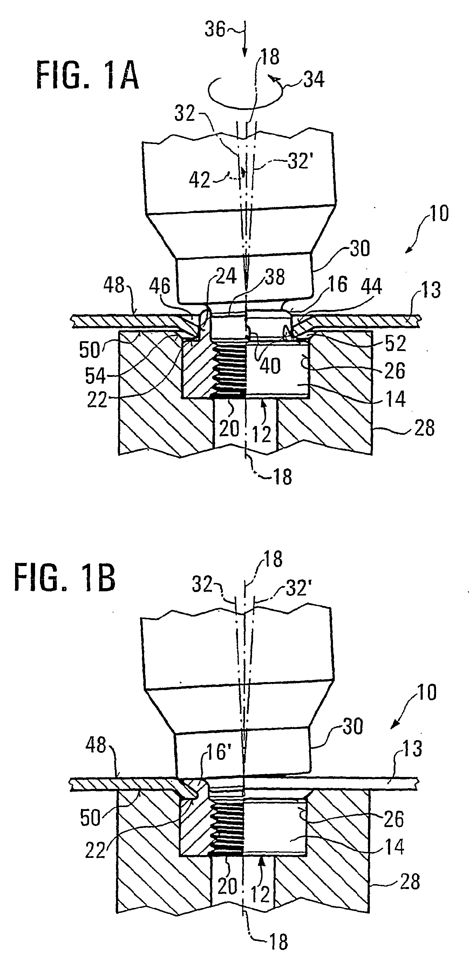

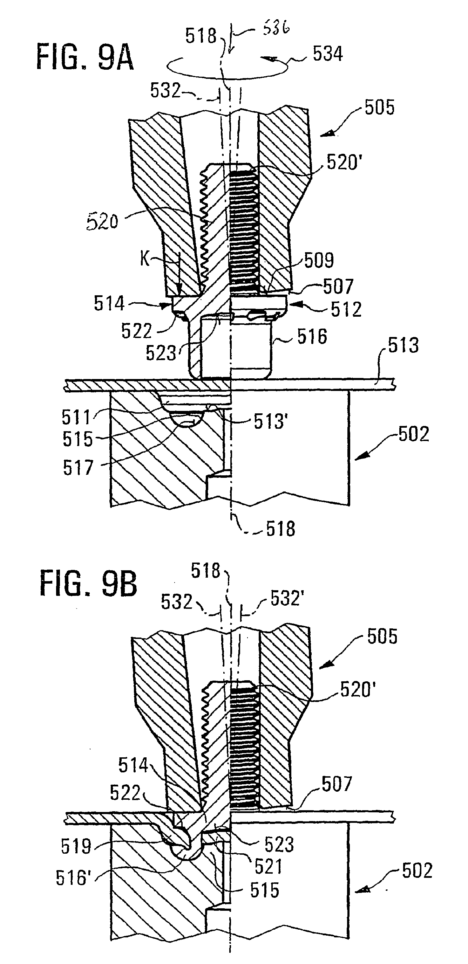

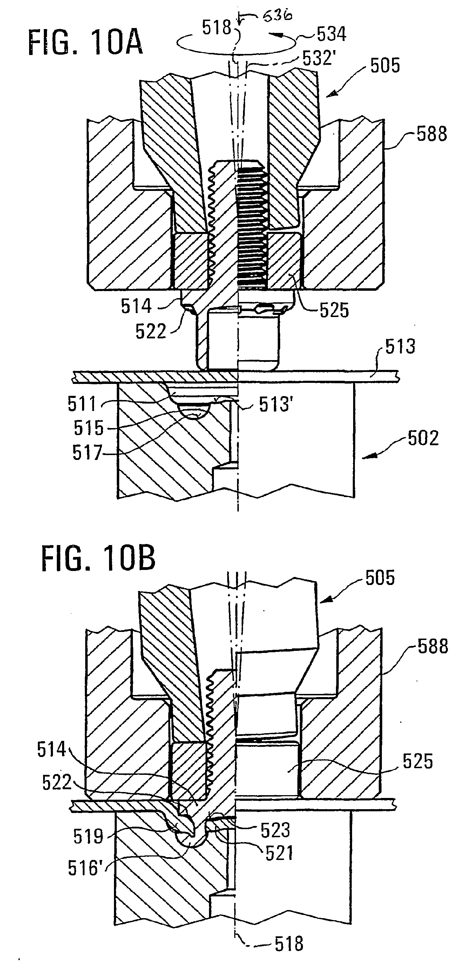

Bezug nehmend auf die Fig. 1A und 1B wird eine Vorrichtung gezeigt, die ausgelegt ist, um ein Verfahren zur Anbringung eines Befestigungselements 12 an ein vorgelochtes Bauteil, beispielsweise ein Blechteil, durchzuführen. Das Befestigungselement weist einen Kopfteil 14 und einen rohrförmigen Nietabschnitt 16 auf, der konzentrisch zu einer Symmetrieachse 18 des Befestigungselementes bzw. eines Befestigungsabschnittes 20 des Befestigungselementes angeordnet ist und über eine sich in radialer Richtung erstreckende Anlagefläche 22 in den Kopfteil 14 übergeht. Es handelt sich bei dem Befestigungselement im konkreten Fall um ein RSN-Mutterelement der Fa. Profil Verbindungstechnik GmbH & Co. KG, so dass der Befestigungsabschnitt hier ein konzentrisch zur Symmetrieachse angeordnetes Gewinde aufweist. Das hier dargestellte Befestigungselement ist stellvertretend für eine Vielzahl von verschiedenen Elementen zu verstehen, darunter auch RND-Mutterelemente oder SBF-Bolzenelemente der genannten Firma, wobei die Anbringung der SBF-Bolzenelemente anhand der Fig. 9A, 9B bzw. 10A, 10B später näher beschrieben wird. In dieser ersten Variante eines Verfahrens wird der Nietabschnitt durch das Loch 24 im Blechteil hindurchgeführt und anschließend umgebördelt, wodurch das Bauteil 13 im Bereich des Loches 24 zwischen der Anlagefläche 22 und dem umgebördelten Nietabschnitt 16' (Fig. 1B) geklemmt wird. Bei diesem Verfahren bzw. dieser Vorrichtung wird der Kopfteil 14 des Befestigungselements in einen Ausschnitt 26 eines ersten Werkzeugs 28 aufgenommen und ein eine Matrizenform zur fortschreitenden Umbördelung des Nietabschnitts aufweisendes zweites Werkzeug 30 wird in eine zur Symmetrieachse 18 des Befestigungselements geneigte Stellung 32 um die Symmetrieachse des Befestigungselements gedreht (Pfeil 34). Gleichzeitig wird eine relative axiale Zustellbewegung (Pfeil 36) zwischen dem den Kopfteil 14 aufnehmenden Werkzeug 28 und dem die Matrizenform aufweisenden Werkzeug 30 vorgenommen, bis der Nietabschnitt 16 vollständig umgebördelt ist, wie bei 16' in Fig. 1B gezeigt ist. Da das Werkzeug 30 um die Schrägachse 32 geneigt ist und um die Symmetrieachse 18 gedreht wird, bewegt sich die Schrägachse 32 kontinuierlich und kann beispielsweise bei 32' zu einem späteren Zeitpunkt gefunden werden.

Die in Fig. 1A und 1B gezeigte untere Stirnseite des Werkzeugs 30 hat eine Form entsprechend der an sich bekannten Matrize für ein RSN-Element, wobei es vorteilhaft sein kann, die Form des Matrizenvorsprungs 38 etwas frei zu machen, um die taumelnde Bewegung zu erlauben. Zu dem Zeitpunkt während der Umbördelung des Nietabschnitts 16 befindet sich der Matrizenvorsprung in Berührung mit dem zylinderförmigen Nietabschnitt nur über eine verhältnismäßig kleine Fläche, die sich progressiv um die Symmetrieachse bei Drehung des Werkzeugs 30 bewegt und zu einer progressiven lokalen Verformung der Umbördelung des Nietabschnitts führt. Die gleichzeitig stattfindende Zustellbewegung in Pfeilrichtung 36 führt in Kombination mit dieser Drehbewegung zu der progressiven Ausbildung des Nietbördels 16', so dass dieses in insgesamt weniger Umdrehungen des Werkzeugs 30 fertig gestellt werden kann.

Zur Durchführung dieses Vorgangs kann eine Vorrichtung (nicht gezeigt) ähnlich einer Säulenbohrmaschine zur Anwendung gelangen, bei der das erste Werkzeug 28 auf dem Tisch der Säulenbohrmaschine und das zweite Werkzeug 30 auf dem Bohrkopf der Säulenbohrmaschine montiert wird, wohl in einer Position entsprechend der Schrägachse 32, die die Drehung um die Symmetrieachse 18 sicherstellt. Die Zustellbewegung kann per Hand durch manuelle Zustellung des Bohrkopfs auf den Tisch zu erfolgen (wie üblich bei einer Säulenbohrmaschine) oder durch einen Antrieb, der den Tisch auf den Bohrkopf zu oder den Bohrkopf auf den Tisch zu bewegt. Natürlich können auch Sondervorrichtungen vorgesehen werden, die die erforderlichen Bewegungen sicherstellen. Das Blechteil kann von Hand oder durch einen kleinen Roboter auf dem Nietabschnitt positioniert werden oder kann am Tisch oder an einer dem Werkzeug 28 benachbart oder umgebend angeordneten Abstützung (nicht gezeigt) befestigt bzw. geklemmt werden, sofern das Werkzeug 28 selbst nicht zu diesem Zweck herangezogen wird, was durchaus möglich ist.

Bei der Umbördelbewegung werden Verdrehsicherungsmerkmale 40, die am Befestigungselement angebracht sind, beispielsweise im Bereich des Nietabschnitts 16 und/oder der Anlagefläche 22 und/oder am Übergang vom Nietabschnitt 16 in die Anlagefläche 22, in Eingriff mit dem Bauteil 13 gebracht.

In einer Weiterentwicklung des Verfahrens kann das zweite Werkzeug nicht nur um die Symmetrieachse 18 des Befestigungselements gedreht werden, sondern gleichzeitig um die Neigungsachse 32, die durch die geneigte Stellung des zweiten Werkzeugs definiert ist. Eine solche zusätzliche Drehbewegung ist mit dem Pfeil 42 in Fig. 1A angedeutet.

Obwohl das vorgelochte Bauteil in einer Ebene im Bereich des Loches liegen könnte, wird das vorgelochte Bauteil 13 mit einem das Loch 24 umgebenden, konusförmigen Rand 44 versehen. Der Nietabschnitt 16 wird von der Seite des vorstehenden konusförmigen Randes 44 durch das Loch 24 hindurch gesteckt. Dies macht es möglich, dass der Nietabschnitt 16' durch die Umbördelung den Ringraum 46 ausfüllt, der auf der dem Kopfteil 14 des Befestigungselements 12 abgewandten Seite 48 des Bauteils im Bereich des konusförmigen Randes 44 vorgesehen ist, so dass das umgelegte Nietbördel 16' zumindest im Wesentlichen nicht über die dem Kopfteil des Befestigungselements abgewandte Seite 48 des Bauteils vorsteht und vorzugsweise von dieser Seite zurück versetzt angeordnet ist.

Der konusförmige Rand 44 des Bauteils kann bei der Umbördelung des Nietabschnitts 16 mindestens teilweise flach gepresst werden, wodurch eine Art Klemmlochnieten realisiert werden kann.

Die sich radial erstreckende Anlagefläche 22 um den rohrförmigen Nietabschnitt 16 herum kann eine axiale Vertiefung entsprechend einer RND-Mutter und/oder eine radiale Vertiefung entsprechend einer EBF-Mutter oder eines EBF-Bolzens aufweisen (beide nicht gezeigt). In einem solchen Fall wird bei der Umbördelung des Nietabschnitts das Material des Bauteils in die entsprechende Vertiefung hinein gedrückt und dort durch die Umbördelung des Nietabschnitts eingeklemmt, was dem Auspresswiderstand bzw. der Verdrehsicherung zugute kommt.

Der das Befestigungselement 12 aufnehmende Ausschnitt 26 des ersten Werkzeugs 28 ist im Vergleich zu dem Kopfteil 14 des Befestigungselements so bemessen, dass die Anlagefläche 22 unterhalb der dem Blechteil 13 zugewandten Stirnseite 50 des ersten Werkzeugs zurückversetzt wird, wobei bei der Umformung des Nietabschnitts einen Aufnahmeraum 52 für den konusförmigen Randbereich des Loches im Bauteil vorgesehen wird.

Ferner wird der ringförmige Aufnahmeraum für den Nietbördel dadurch gebildet bzw. aufrechterhalten, dass der Ausschnitt 26 über eine Konusfläche 54 in die genannte Stirnseite des ersten Werkzeugs übergeht.

Der eingeschlossene Konuswinkel der Konusfläche 54 ist in diesem Beispiel kleiner als der des konusförmigen Randbereichs 44 des Bauteils 13.

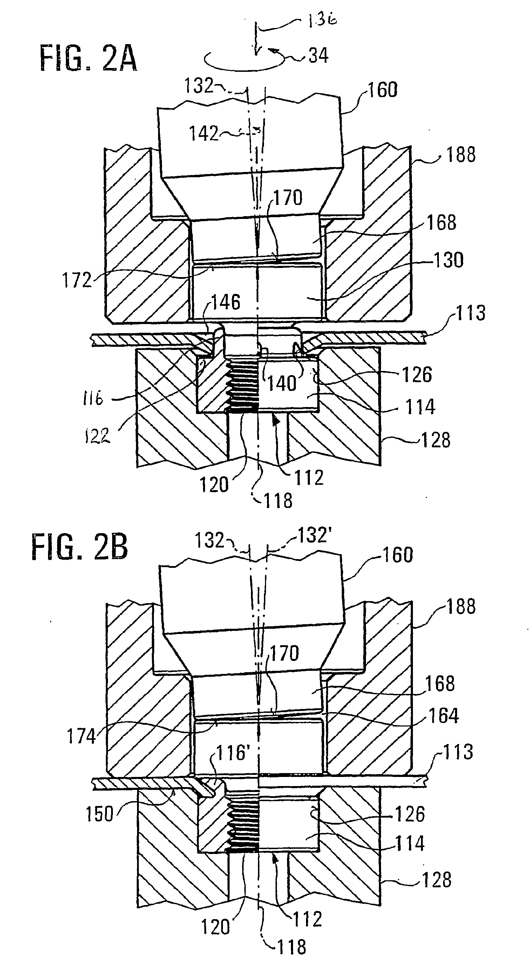

Ein erfindungsgemäßes Verfahren bzw. eine erfindungsgemäße Vorrichtung zur Anbringung des Befestigungselements, die im Zusammenhang mit den Fig. 1A und 1B bereits ausführlich beschrieben sind, sind in den Fig. 2A und 2B dargestellt. Es werden bei der Beschreibung der Fig. 2A und 2B die gleichen Bezugszeichen für Teile verwendet, die bisher in der Fig. 1A- und 1B-Ausführung verwendet werden, jedoch mit der Zusatzzahl 100 versehen. Es versteht sich, dass die gleiche Beschreibung für diese Teile gilt, wie für die Ausführung gemäß Fig. 1A und 1B, es sei denn, etwas Gegenteiliges wird zum Ausdruck gebracht.

Bei diesem Verfahren bzw. bei dieser Vorrichtung wird der Kopfteil 114 des Befestigungselements ebenfalls in einen Ausschnitt 126 eines ersten Werkzeugs 128 aufgenommen. Das eine Matrizenform zur fortschreitenden Umbördelung des Nietabschnitts 116 aufweisende zweite Werkzeug 130 wird aber hier in eine zur Symmetrieachse 118 des Befestigungselements koaxiale Stellung gebracht und mit einem zur Symmetrieachse geneigten und um die Symmetrieachse 118 gedrehten dritten Werkzeug 160 auf eine der Matrizenform abgewandte Stirnseite 162 des zweiten Werkzeugs 130 gedrückt. Die relative axiale Zustellbewegung zwischen dem ersten den Kopfteil 114 aufnehmenden Werkzeug 128 und dem dritten das zweite Werkzeug 130 mitbewegende Werkzeug 160 wird bei Drehung des dritten Werkzeugs 160 um die Symmetrieachse 118 so lange ausgeführt, bis der Nietabschnitt 116 vollständig umgebördelt ist 116' (Fig. 2B). Das zweite Werkzeug 130 wird durch die Drehbewegung des dritten Werkzeugs üblicherweise nicht mitgedreht, sondern nimmt bei Drehung des dritten Werkzeugs stets andere, leicht geneigte Stellungen an, die für die lokale Kraftübertragung auf den Nietabschnitt sorgen.

Das zweite Werkzeug 130 wird hier in einer kreiszylindrischen Aufnahme 164 eines Führungsteils 166 gehalten und mit etwas radialem Spiel geführt. Das Führungsteil 166 ist auf das Blechteil zu mittels einer nicht gezeigten Feder vorgespannt und zumindest im Endstadium der Umbördelung des Nietabschnitts 116 als Niederhalter für das Blechteil 113. Es klemmt dieses gegen die Stirnseite 150 des ersten Werkzeugs 128.

Das dritte Werkzeug 160 weist vorzugsweise ein zylindrisches Stirnende 168 auf, das ebenfalls in der kreiszylindrischen Aufnahme 164 des Führungsteils 166 angeordnet ist und von dieser geführt wird.

Das Stirnende 170 des dritten Werkzeugs, das auf die dem Matrizenvorsprung 138 abgewandte Stirnseite 172 des zweiten Werkzeugs drückt, weist eine Konusform auf, wodurch das dritte Werkzeug 160 eine zumindest im Wesentlichen linienartige Berührung 174 mit der Stirnseite 172 des zweiten Werkzeugs bildet, wobei diese Berührungslinie 174 sich mindestens vorwiegend auf einer Seite der Symmetrieachse 118 befindet und sich bei Drehung des dritten Werkzeugs um die Symmetrieachse 118 herum bewegt.

Auch hier werden bei der Umbördelbewegung Verdrehsicherungsmerkmale 140, die am Befestigungselement angebracht sind, beispielsweise im Bereich des Nietabschnitts und/oder der Anlagefläche und/oder am Übergang vom Nietabschnitt in die Anlagefläche, in Eingriff mit dem Bauteil 113 gebracht.

Auch hier besteht die Möglichkeit, das dritte Werkzeug 160 nicht nur um die Symmetrieachse 118 des Befestigungselements zu drehen, sondern gleichzeitig auch um die Neigungsachse 132, die durch die geneigte Stellung des zweiten Werkzeugs definiert ist.

Die Ausbildung des Werkzeugs 128 und die Aufnahme des Befestigungselements in den Ausschnitt 126 sind mit der Ausführung gemäß Fig. 1A und 1B identisch und werden hier nicht extra beschrieben.

Auch hier kann der konusförmige Rand des Bauteils bei der Umbördelung des Nietabschnitts mindestens teilweise flach gepresst werden.

Auch hier kann die sich radial erstreckende Anlagefläche um den rohrförmigen Nietabschnitt herum eine axiale Vertiefung und/oder eine radiale Vertiefung aufweisen, und bei der Umbördelung des Nietabschnitts das Material des Bauteils in diese Vertiefung hinein gedrückt und dort durch die Umbördelung des Nietabschnitts eingeklemmt werden.

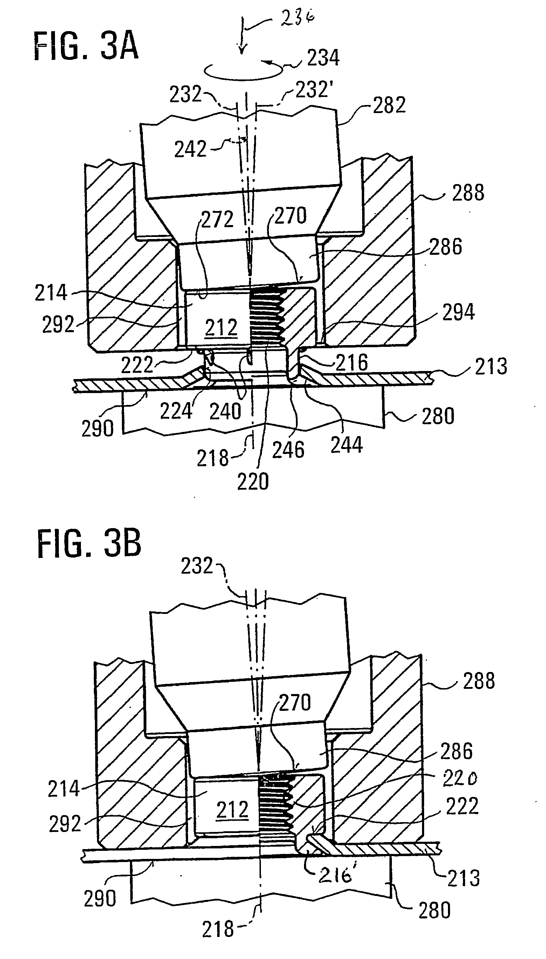

Ein zweites beispielhaftes Verfahren bzw. eine weitere beispielhafte Vorrichtung zur Anbringung des Befestigungselements, die im Zusammenhang mit den Fig. 1A und 1B bereits ausführlich beschrieben sind, sind in den Fig. 3A und 3B dargestellt. Es werden bei der Beschreibung der Fig. 3A und 3B die gleichen Bezugszeichen für Teile verwendet, die bisher in dem Beispiel der Fig. 1A und 1B verwendet werden, jedoch mit der Zusatzzahl 200 versehen. Es versteht sich, dass die gleiche Beschreibung für diese Teile gilt, wie für die Ausführung gemäß Fig. 1A und 1B, es sei denn, etwas Gegenteiliges wird zum Ausdruck gebracht.

Dieses zweite Beispiel kennzeichnet sich dadurch aus, dass der Nietabschnitt 216 des Befestigungselements 212 zumindest im Wesentlichen in Richtung der Symmetrieachse 218 auf eine zur fortschreitenden Umbördelung des Nietabschnitts ausgelegte Matrize 280 mittels eines sich in einer zur Symmetrieachse 218 des Befestigungselements geneigten Stellung 232 angeordneten, um die Symmetrieachse 218 des Befestigungselements herum drehbaren und auf einer dem Nietabschnitt 216 abgewandten Stirnseite 284 des Kopfteils 214 gedrückten Werkzeugs 282 gedrückt wird. Gleichzeitig wird eine relative axiale Zustellbewegung zwischen dem auf den Kopfteil 214 einwirkenden Werkzeug 282 und der Matrize 280 vorgenommen bis der Nietabschnitt 216 vollständig umgebördelt ist 216' (Fig. 3B).

Das Werkzeug 282 weist ein dem Befestigungselement zugewandtes zylindrisches vorderes Teil 286 auf, das in einer kreiszylindrischen Aufnahme eines Führungsteils 288 gehalten und mit etwas radialem Spiel geführt wird. Das Führungsteil 288 ist auf das Blechteil zu beispielsweise mittels einer nicht dargestellten Feder vorgespannt und dient zumindest im Endstadium der Umbördelung des Nietabschnitts 216 als Niederhalter für das Blechteil 213 und klemmt dieses gegen die Stirnseite 290 der Matrize 280.

Das Stirnende des Werkzeugs 282, das auf die dem Matrizenvorsprung 238 abgewandte Stirnseite des Kopfteils 214 des Befestigungselements drückt, weist eine Konusform auf, wodurch das Werkzeug eine zumindest im Wesentlichen linienartige Berührung 272 mit der Stirnseite des Kopfteils des Befestigungselements bildet, wobei diese Berührungslinie sich mindestens vorwiegend auf einer Seite der Symmetrieachse 218 befindet und sich bei Drehung des Werkzeugs 282 um die Symmetrieachse 218 herum bewegt.

Auch hier werden bei der Umbördelbewegung Verdrehsicherungsmerkmale 240, die am Befestigungselement angebracht sind, beispielsweise im Bereich des Nietabschnitts 216 und/oder der Anlagefläche 222 und/oder am Übergang vom Nietabschnitt 216 in die Anlagefläche 222, in Eingriff mit dem Bauteil gebracht.

Auch hier kann das Werkzeug 282 nicht nur um die Symmetrieachse 218 des Befestigungselements 212 gedreht werden, sondern auch gleichzeitig um die Neigungsachse, die durch die geneigte Stellung des Werkzeugs definiert ist.

Auch hier wird das vorgelochte Bauteil 213 mit einem das Loch 224 umgebenden, konusförmigen Rand 244 versehen, wobei der Nietabschnitt 216 von der Seite des vorstehenden konusförmigen Randes durch das Loch hindurch gesteckt wird. Durch die Umbördelung des Nietabschnitts füllt dieser den Ringraum 246 aus, der auf der dem Kopfteil 214 des Befestigungselements abgewandten Seite des Bauteils 213 im Bereich des konusförmigen Randes vorgesehen ist, so dass das umgelegte Nietbördel zumindest im Wesentlichen nicht über die dem Kopfteil des Befestigungselements abgewandte Seite des Bauteils vorsteht.

In diesem Beispiel kann der konusförmige Rand 244 des Bauteils bei der Umbördelung des Nietabschnitts 216 im Sinne des Klemmlochnietverfahrens mindestens teilweise flach gepresst werden.

Auch hier kann die sich radial erstreckende Anlagefläche 222 um den rohrförmigen Nietabschnitt 216 herum eine axiale Vertiefung und/oder eine radiale Vertiefung aufweisen, wobei bei der Umbördelung des Nietabschnitts das Material des Bauteils in diese Vertiefung hinein gedrückt und dort durch die Umbördelung des Nietabschnitts eingeklemmt wird.

Ein ringförmiger Aufnahmeraum 290 für das Nietbördel 216 im Bauteil 213 kann hier dadurch gebildet werden, dass der Kopfteil 214 des Befestigungselements innerhalb eines Ausschnitts 292 des Führungsteils 288 aufgenommen wird und dieser über eine Konusfläche 294 in die Stirnseite des Führungsteils übergeht. Im Endstadium des Umbördelungvorgangs kann das Führungsteil 288 das Bauteil gegen die Stirnseite der Matrize drücken, wobei die Anlagefläche 222 des Befestigungselements 212 von einer ersten mit der Stirnseite des Führungsteils ausgerichteten Stellung (Fig. 3A) am Anfang des Umbördelvorgangs in eine am Ende des Umbördelvorgangs gegenüber dieser Stirnseite zurück versetzten Stellung übergeht (Fig. 3B).

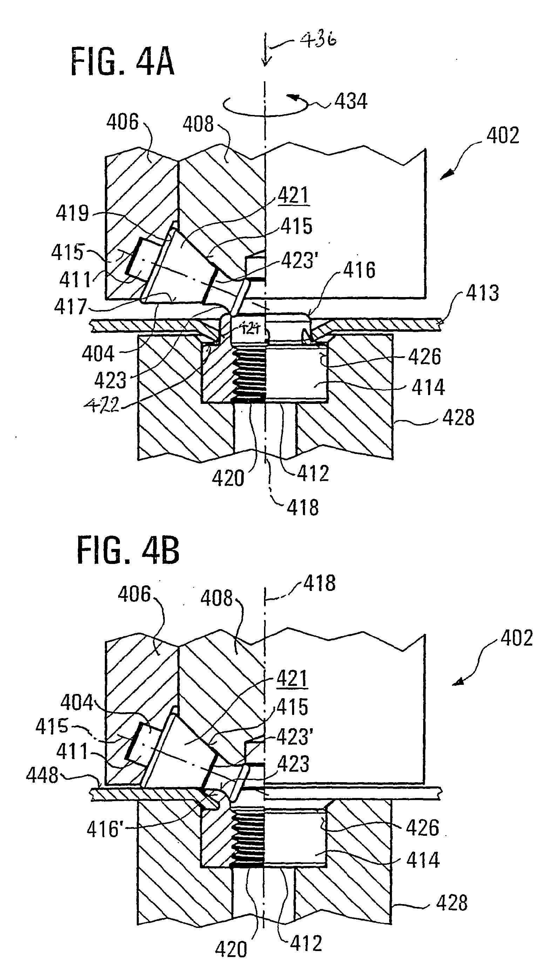

Ein drittes beispielhaftes Verfahren bzw. eine weitere beispielhafte Vorrichtung zur Anbringung des Befestigungselements, sind in den Fig. 4A und 4B dargestellt. Es werden bei der Beschreibung der Fig. 4A und 4B die gleichen Bezugszeichen für Teile verwendet, die bisher in der Fig. 1A-und 1B-Ausführung verwendet werden, jedoch mit der Zusatzzahl 300 versehen. Es versteht sich, dass die gleiche Beschreibung für diese Teile gilt, wie für die Ausführung gemäß Fig. 1A und 1B, es sei denn, etwas Gegenteiliges wird zum Ausdruck gebracht.

Dieses dritte Beispiel zeichnet sich dadurch aus, dass der Kopfteil 414 des Befestigungselements 412 in einen Ausschnitt 426 eines ersten Werkzeugs 428 aufgenommen wird und ein zweites Werkzeug 402 mit mindestens einem um eine zur Symmetrieachse schräg gestellte Achse drehbaren Rotationskörper 404 zur fortschreitenden Umbördelung des Nietabschnitts 416 vorgesehen ist, wobei zu diesem Zweck das zweite Werkzeug um die Symmetrieachse 418 gedreht wird und gleichzeitig eine relative axiale Zustellbewegung zwischen dem den Kopfteil 418 aufnehmenden ersten Werkzeug 428 und dem zweiten Werkzeug 402 vorgenommen wird, bis der Nietabschnitt 416 vollständig umgebördelt ist.

Das zweite Werkzeug 402 weist einen äußeren ringförmigen Teil 406 und einen mittleren zylindrischen Teil 408 auf. Der Rotationskörper 404 ist mit einem im äußeren Ring 406 drehbar geführten Lagerzapfen versehen, wobei entweder nur der innere Teil 408 um die Symmetrieachse 418 herum direkt angetrieben wird, wodurch der Rotationskörper 404 sich um die Schrägachse 415 dreht, am Nietabschnitt 416 abrollt und vom inneren Teil 408 des zweiten Werkzeugs 402 abgestützt wird, wobei der äußere Teil 406 über den Lagerzapfen mit angetrieben wird, sonst aber als frei drehbar anzusehen ist, oder der äußere Teil 406 wird gleichzeitig mit dem inneren Teil um die Symmetrieachse angetrieben.

Die Form des inneren Teils 408 des zweiten Werkzeugs 402 im Bereich seiner Stirnseite 415, die an der Mantelfläche 417 des Rotationskörpers 404 anliegt, weist eine zu der Formgebung des Rotationkörpers komplementäre Form auf, wodurch der Rotationskörper an seiner Mantelfläche über einen erheblichen Teil der Länge der Mantelfläche eine Linienberührung mit der Stirnseite 415 des inneren Werkzeugs 408 hat und von diesem abgestützt wird.

Der Rotationskörper 404 weist im Bereich des Führungszapfens 411 bezogen auf die Schrägachse eine sich radial erstreckende Fläche 419 auf, die an einer Gegenfläche 421 des äußeren Rings 406 des zweiten Werkzeugs 402 abgestützt wird, wodurch die Lage des Rotationskörpers 404 entlang der Schrägachse 415 in der Richtung von der Symmetrieachse 418 weg festgelegt wird.

Im Beispiel der Fig. 4A und 4B weist der Rotationskörper 404 einen ersten im Bereich des Führungszapfens angeordneten konusförmigen Abschnitt 421 auf, der in Richtung der Schrägachse 415 gesehen vom Führungszapfen 411 weggehend, d.h. auf die Symmetrieachse 418 zugehend, konvergiert. Im Anschluss an den konusförmigen Bereich weist der Rotationskörper 404 einen taillierten Abschnitt 423 auf, beispielsweise mit der Formgebung einer Sanduhr, eines Belegpollers oder eines Spills, der mit dem Nietabschnitt 416 zur Durchführung der Umbördelung zusammenarbeitet. Dieser taillierte Abschnitt 423 geht über eine kleine Ringfase 423' in den konischen Abschnitt 421 über. Dies sorgt dafür, dass der umgebördelte Nietabschnitt 416' unterhalb der Oberseite 448 des Blechteils liegt. Die Stirnseite des inneren Teils 408 weist an der Stelle der Ringfase eine kleine Freimachung auf. Durch die Anlage des konusförmigen Abschnitts 421 des Rotationskörpers am inneren Teil 408 des zweiten Werkzeugs 402 wird eine Bewegung des Rotationskörpers entlang der Schrägachse 415 auf die Symmetrieachse 418 zu verhindert bzw. begrenzt.

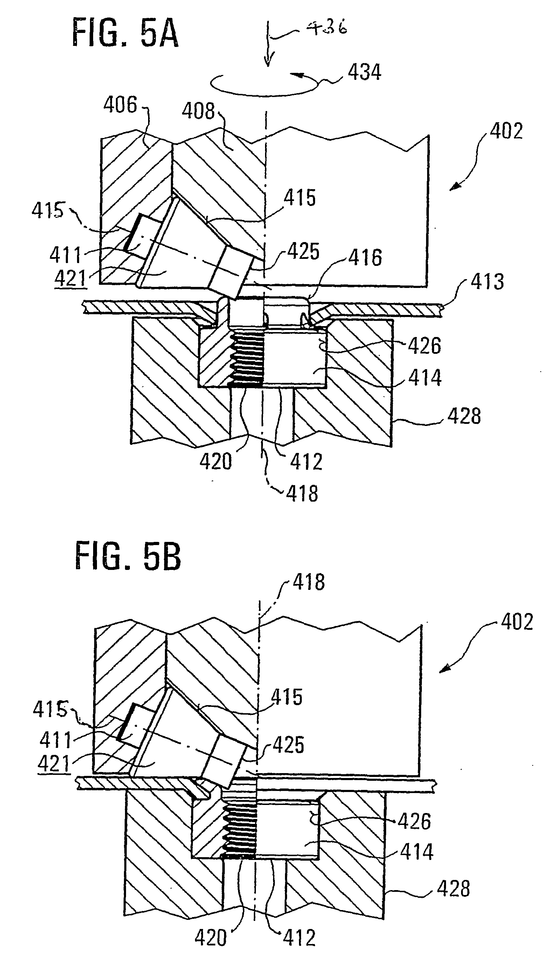

Weitere abgewandelte Versionen des Beispiels gemäß Fig. 4A und 4B werden nun anhand der weiteren Figuren 5A, 5B; 6A, 6B; 7A, 7B und 8A, 8B näher beschrieben. In diesen Figuren werden die gleichen Bezugszeichen verwendet wie in den Fig. 4A und 4B und es versteht sich, dass die Beschreibung der Fig. 4A und 4B entsprechend für die weiteren Figuren gilt.

In dem Beispiel gemäß Fig. 5A, 5B weist der Rotationskörper 404 ebenfalls einen ersten im Bereich des Führungszapfens angeordneten konusförmigen Abschnitt 421 auf, der in Richtung der Schrägachse 415 gesehen vom Führungszapfen 411 weggehend, d.h. auf die Symmetrieachse 418 zugehend, konvergiert. Im Anschluss an den konusförmigen Bereich weist der Rotationskörper 404 einen kreiszylindrischen Abschnitt 425 auf, der mit dem Nietabschnitt 416 zur Durchführung der Umbördelung zusammenarbeitet, wobei die Anlage des konusförmigen Abschnitts 421 des Rotationskörpers 404 am inneren Teil 408 des zweiten Werkzeugs 402 eine Bewegung des Rotationskörpers 404 entlang der Schrägachse 419 auf die Symmetrieachse 418 zu verhindert bzw. begrenzt.

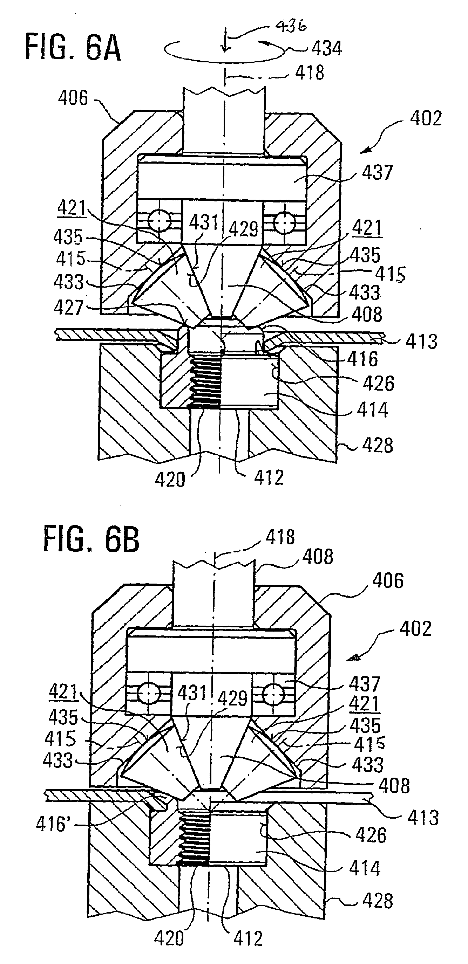

Gemäß Fig. 6A, 6B können zwei oder mehrere Rotationskörper 404 vorgesehen werden, die jeweils einen konusförmigen Abschnitt 421 aufweisen, der in Berührung mit der inneren Seite des rohrförmigen Nietabschnitts 416 gelangt und an einer der Berührungsstelle 427 mit dem Nietabschnitt diametral gegenüberliegenden Seite 429 mit einem konusförmigen Abschnitt 431 des inneren Teils 408 des zweiten Werkzeugs 402 in Berührung gelangen und an diesem abgestützt sind.

In diesem Beispiel weist der bzw. jeder Rotationskörper 404 an seiner dem Befestigungselement 412 abgewandten Stirnseite 433 eine gekrümmte Fläche 433 auf, die an einer Abstützfläche 435 des ringförmigen Teils 406 des zweiten Werkzeugs 402 anliegt, die an der Stelle der jeweiligen Rotationskörper 404 zumindest in etwa senkrecht zur jeweiligen Schrägachse 415 steht.

Der äußere Teil 406 des zweiten Werkzeugs 402 wird durch ein axiales Lager 437 am inneren Teil abgestützt, wodurch eine relative Drehbewegung zwischen diesen Teilen, die automatisch eintritt, leichter vonstatten geht.

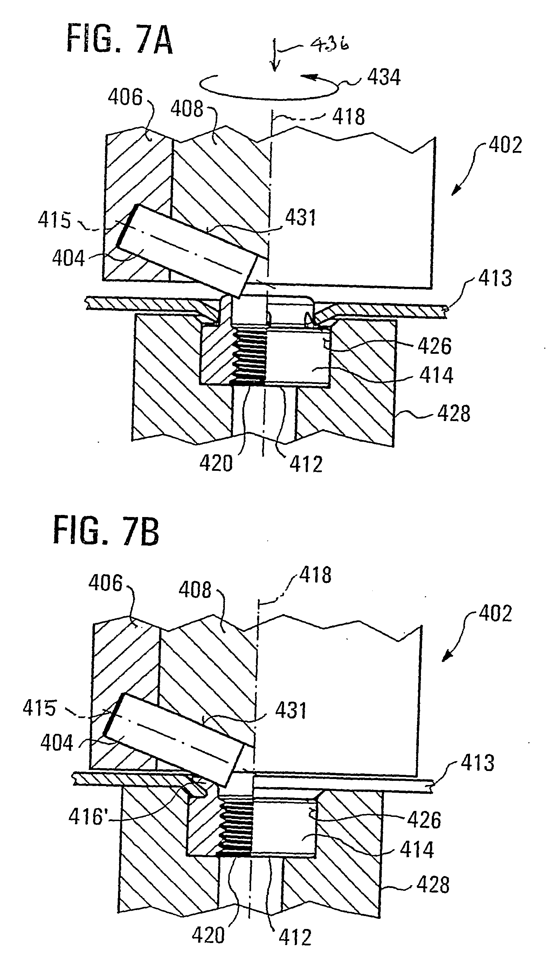

Gemäß Fig. 7A und 7B wird die Umbördelung des Nietabschnitts 416 mit einem kreiszylindrischen schräggestellten Rotationskörper 404 vorgenommen. Denkbar wäre es auch, dass die Drehachse des Rotationskörpers bzw. der Rotationskörper bei entsprechender, beispielsweise flaschenhalsartigen Gestaltung des Rotationskörpers und komplementäre Ausgestaltung der Stirnseite des inneren Teils horizontal, d.h. senkrecht zur Symmetrieachse, angeordnet werden könnte.

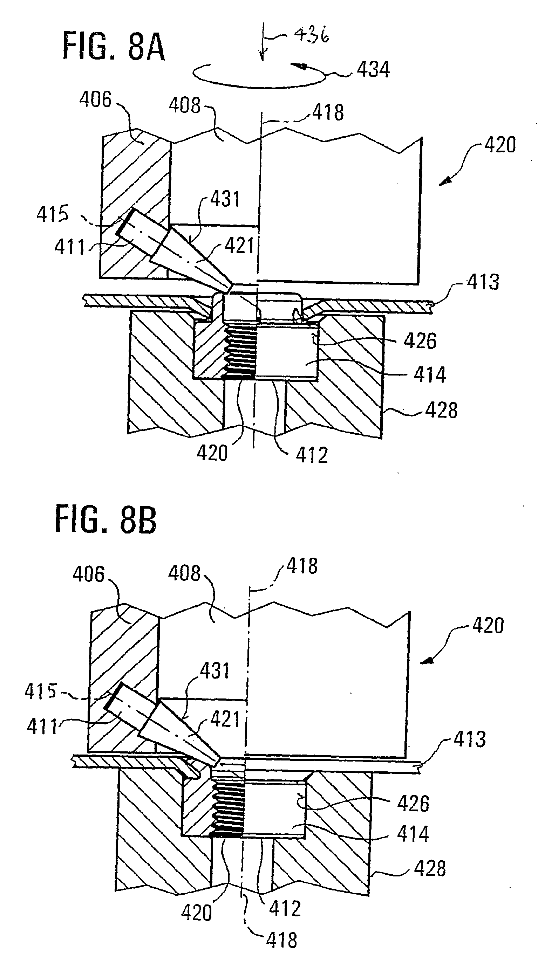

Gemäß Fig. 8A und 8B weist der Rotationskörper 404 zusätzlich zum Führungszapfen 411 nur einen konusförmigen Abschnitt 421 auf.

Bei all diesen Beispielen werden bei der Umbördelbewegung Verdrehsicherungsmerkmale 440, die am Befestigungselement 412 angebracht sind, beispielsweise im Bereich des Nietabschnitts 416 und/oder der Anlagefläche 422 und/oder am Übergang vom Nietabschnitt 416 in die Anlagefläche 422, in Eingriff mit dem Bauteil gebracht.

Auch hier wird das vorgelochte Bauteil 413 mit einem das Loch 424 umgebenden, konusförmigen Rand 444 versehen, wobei der Nietabschnitt 416 von der Seite des vorstehenden konusförmigen Randes durch das Loch hindurch gesteckt wird. Auch hier füllt der Nietabschnitt durch die Umbördelung den Ringraum 446 aus, der auf der dem Kopfteil 414 des Befestigungselements abgewandten Seite des Bauteils 413 im Bereich des konusförmigen Randes 444 vorgesehen ist, so dass das umgelegte Nietbördel zumindest im Wesentlichen nicht über die dem Kopfteil des Befestigungselements abgewandten Seite des Bauteils vorsteht.

Der konusförmige Rand des Bauteils kann bei der Umbördelung des Nietabschnitts 416 mindestens teilweise flach gepresst werden.

Bei diesen Beispielen ist es möglich, die sich radial erstreckende Anlagefläche um den rohrförmigen Nietabschnitt herum mit einer axialen Vertiefung und/oder einer radialen Vertiefung zu versehen und bei der Umbördelung des Nietabschnitts das Material des Bauteils in diese Vertiefung hineinzudrücken und dort durch die Umbördelung des Nietabschnitts einzuklemmen.

Das erfindungsgemäße Verfahren zur Anbringung eines Befestigungselements, mit einem Kopfteil mit einem rohrförmigen Nietabschnitt, der konzentrisch zu einer Symmetrieachse des Befestigungselementes bzw. eines Befestigungsabschnittes des Befestigungselementes angeordnet ist und über eine sich in radialer Richtung erstreckende Anlagefläche in den Kopfteil übergeht, an ein Bauteil, beispielsweise ein Blechteil, wobei der Nietabschnitt durch das Bauteil unter Bildung eines Loches im Bauteil hindurchgeführt und der Nietabschnitt umgebördelt wird, wodurch das Bauteil im Bereich des Loches zwischen der Anlagefläche und dem umgebördelten Nietabschnitt geklemmt wird, kann auch dadurch ausgeführt werden, dass das Bauteil über eine Nietmatrize angeordnet wird und eine lokale Kraft auf den Kopfteil des Befestigungselements ausgeübt wird, die in Kreisen um die mittlere Symmetrieachse herum bewegt wird, wodurch bei gleichzeitiger Durchführung einer relativen axialen Zustellbewegung zwischen dem die Kraft ausübenden Werkzeug und der Matrize der Nietabschnitt durch das Bauteil hindurch gedrückt und anschließend umgebördelt wird. Alternativ hierzu kann die lokale Kraft auf die Matrize anstatt auf den Kopfteil ausgeübt werden.

Mit diesem Verfahren bzw. mit der entsprechenden Vorrichtung wird anstatt ein an der Position der Anbringung des Funktionselements vorgelochtes Blechteil zu verwenden, ein ungelochtes Blechteil verwendet und es wird der Nietabschnitt des Befestigungselements durch das Blechteil hindurch gedrückt.

Wie dies erfolgen kann, wird nunmehr anhand der Fig. 9A und 9B beschrieben, und zwar für die Variante, wonach die lokale Kraft auf den Kopfteil des Befestigungselements ausgeübt wird.

Bezug nehmend auf die Fig. 9A und 9B wird dort ein Funktionselement 512 gezeigt, das ein SBF-Element der Fa. Profil Verbindungstechnik GmbH & Co. KG darstellt, entweder nach der alten Ausführung gemäß deutschem Patent 3447006 oder mit der besonderen Ausbildung des Nietabschnitts 516 entsprechend der PCT-Anmeldung PCT/ EP02 / 10001. Das Befestigungselement 512 weist auch hier einen Kopfteil 514 mit einem rohrförmigen oder zylinderförmigen Nietabschnitt 516 auf, der konzentrisch zu einer Symmetrieachse 518 des Befestigungselements bzw. eines Befestigungsabschnitts 520' des Befestigungselements angeordnet ist. In diesem Beispiel ist der Befestigungsabschnitt 520' durch ein externes Gewinde gebildet, d.h. es handelt sich bei dem Befestigungselement um ein männliches Befestigungselement.

Der zylinderförmige Nietabschnitt geht über eine sich in radialer Richtung erstreckende Anlagefläche 522 in den Kopfteil 514 über. Wenn hier von einer sich in radialer Richtung erstreckenden Anlagefläche die Rede ist, bedeutet dies nicht, dass die Anlagefläche nur in einer Ebene senkrecht zur Symmetrieachse 518 liegen kann, sondern dass die Anlagefläche sich in radialer Richtung, d.h. mit einer radialen Komponente von der Symmetrieachse weg führt. D.h. die Anlagefläche könnte beispielsweise auch eine Konusfläche sein. Diese Überlegungen gelten hier für alle Beispiele. In diesem Beispiel wird das Blechteil 513 auf einer herkömmlichen Matrize 502 für die Anbringung eines SBF-Bolzens am Blechteil abgestützt, wobei diese Matrize an sich aus dem erwähnten deutschen Patent 3447006 bekannt ist.

Oberhalb des Kopfteils 514 des Bolzenelements 512 befindet sich ein oberes Werkzeug 505 mit einer mittleren Passage, die der Aufnahme des Schaftteils, d.h. des Befestigungsabschnitts 520' des Befestigungselements dient. Die untere Stirnseite 507 des Werkzeugs 505 in Fig. 9A ist als Konusfläche ausgebildet und das Werkzeug 505 nimmt eine geneigte Stellung 532 zur mittleren Symmetrieachse 518 des Befestigungselements 512 an. Aufgrund der Konusform des oberen Werkzeugs 505 und der entsprechenden geneigten Stellung des oberen Werkzeugs 505 liegt die konusförmige Stirnfläche des oberen Werkzeugs 505 in der Darstellung gemäß Fig. 9A nur auf der linken Seite der Ringfläche 509, die beim Übergang des Befestigungsabschnitts 520' in den Kopfteil 514 vorgesehen ist. Durch Drehung des Werkzeugs 505 in der gezeigten geneigten Position um die Symmetrieachse 518 wird eine lokale Kraft, in Fig. 9A durch den Pfeil K angedeutet, auf die Ringfläche 509 des Bolzenelements ausgeübt, wobei diese Kraft K mit Drehung des Werkzeugs 505 um die Ringfläche, d.h. um die Symmetrieachse 518 herum wandert. Diese Bewegung entspricht der Bewegung, die im Zusammenhang mit den anderen Verfahrensvarianten beschrieben wurde. Es bedeutet, dass der Nietabschnitt auch eine lokale Kraft auf das Blechteil 513 ausübt, wodurch der Nietabschnitt zunächst zu einer Eindellung des Blechteils in den entsprechenden Hohlraum 511 der Matrize führt, bis kurz vor dem Erreichen der Stirnseite 513' des mittleren Pfostens 515 der Matrize der Nietabschnitt 516 das Blechteil durchschneidet und anschließend durch Berührung mit der ringförmigen Rollfläche 517 der Matrize radial nach außen gerollt wird, wodurch der Ringkragen 519, der aus dem Blechmaterial 513 gebildet wird, zwischen dem umgebördelten Nietabschnitt 516' (Fig. 9B) und der sich radial erstreckenden Anlagefläche 522 geklemmt wird. Der Butzen 521, der durch das Durchstanzen des Blechteils entsteht, wird zwischen dem inneren Vorsprung 515 der Matrize und dem Boden 523 des rohrförmigen Nietabschnitts 516 gedrängt und dort durch die leichte Ausdehnung des Nietabschnitts unterhalb des Stanzbutzens festgeklemmt, wodurch auch die Verbindung zwischen dem Bolzenelement 512 und dem Blechteil 513 versteift wird. Beim Erreichen der in Fig. 9B dargestellten Lage ist das Anbringungsverfahren vollendet. Das obere Werkzeug 505 kann weg gehoben werden und das Blechteil 513 mit dem angebrachten Befestigungselement 512 von der Matrize 502 abgehoben werden.

Die Fig. 10A und 10B zeigen eine der Vorrichtungen gemäß Fig. 9A und 9B ähnliche Vorrichtung, wobei die gleichen Bezugszeichen in den Fig. 10A und 10B verwendet werden, die in Fig. 9A und 9B verwendet werden, und nur die besonderen Unterschiede genauer beschrieben werden. Es versteht sich, dass die Beschreibung der Fig. 9A und 9B ebenso für Teile der Fig. 10A und 10B gilt, die mit den gleichen Bezugszeichen versehen sind.

Der Hauptunterschied zwischen dem Beispiel gemäß Fig. 10A und 10B und der der Fig. 9A und 9B liegt darin, dass das obere Werkzeug 505 hier nicht direkt auf der Ringfläche des Bolzenelements 512 arbeitet, sondern indirekt über einen Ring 525. Ferner wird der Ring 525, wie auch der zylindrische untere Abschnitt des Werkzeugs 505, in einem Führungsteil 588 in die zylindrische Führungsaufnahme 592 mit etwas radialem Spiel geführt, was der Ausrichtung des Bolzenelements 512 mit der Matrize 502 zugute kommt. Es ist nämlich wichtig, dass die Matrize 502 und das Befestigungselement 512 koaxial zueinander, d.h. zu der Symmetrieachse 518 ausgerichtet sind, damit der Nietvorgang sauber ausgeführt werden kann.

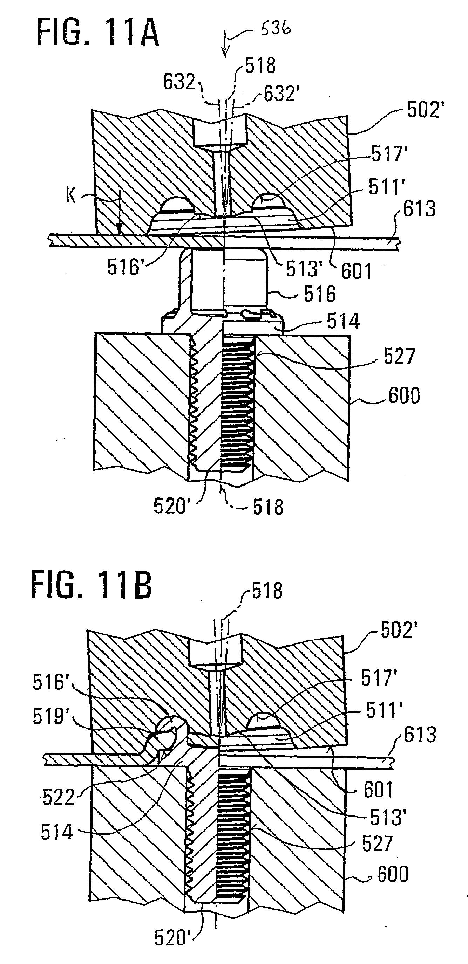

Anstatt die lokale Kraft auf den Kopfteil des Bolzenelements 512 wirken zu lassen, kann entsprechend der Ausführung gemäß Fig. 11A und 11B die lokale Kraft mittels der Matrize 502' auf das Blechteil ausgeübt werden.

In diesem Beispiel wird der Schaftteil, d.h. des Befestigungsabschnitts 520' des Befestigungselements 512, in einer Führungsaufnahme 527 eines unteren Werkzeugs 600 aufgenommen. Das Blechteil 613 wird auf den Nietabschnitt 516 des Bolzenelements 512 gelegt und die Matrize 502' wird in einer geneigten Stellung 632 um die Symmetrieachse 518 des Befestigungselements 512 gedreht. Die untere Stirnseite 601 der Matrize 502' in Fig. 11A ist hier leicht konusförmig ausgeführt, so dass eine Berührung mit dem Blechteil 613 in Fig. 11A nur auf der linken Seite der Symmetrieachse 518 erfolgt. Durch Drehung der Matrize 502' um die Symmetrieachse 518 wandert die lokale Kraft K ringförmig um die Symmetrieachse 518 herum und sorgt entsprechend der Ausführung gemäß Fig. 9A und 9B für eine Erzeugung einer Vertiefung des Blechteil (in der Darstellung der Fig. 11A eine Erhöhung) innerhalb der Hohlkammer 511' der Matrize, bis der Nietabschnitt 516' das Blechteil durchstößt und durch die Rollfläche 517' um den so gebildeten Kragen 519' des Blechteils 513 umgelegt wird, wodurch auch hier entsprechend der Fig. 11B dieser Kragen 519' zwischen der Anlagefläche 522 und dem umgebördelten Nietabschnitt 516' eingeklemmt wird. Auch hier wird der Butzen 521' innerhalb des Nietabschnitts festgeklemmt.

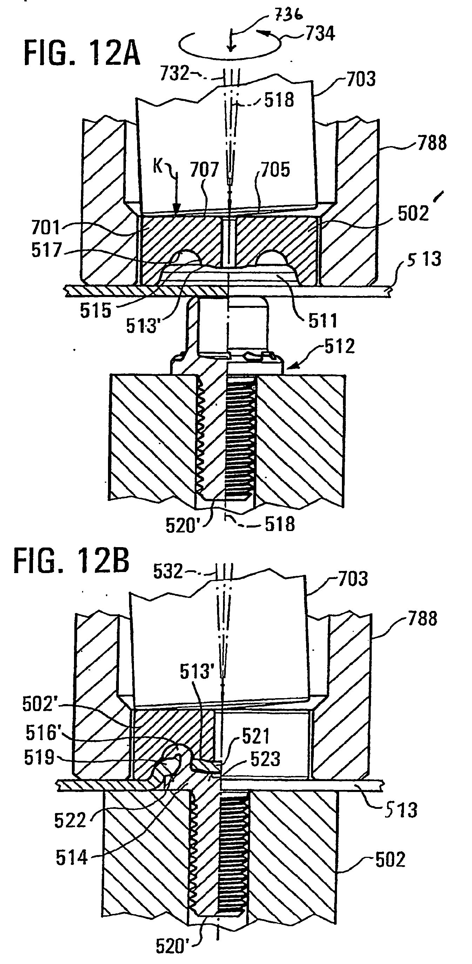

Anstatt die Matrize als ganzes um die Symmetrieachse zu drehen, kann der vordere Abschnitt 701 der Matrize 502 gemäß Fig. 9A verwendet werden, um das Stanz- und Nietverfahren durchzuführen. Bei dieser Variante, die in den Fig. 12A und B gezeigt ist, steht der vordere Abschnitt der Matrize koaxial zum Befestigungselement 512, d.h. koaxial zur Symmetrieachse 518. Es wird ein Werkzeug 703 verwendet, das in einer geneigten Position 732 angeordnet wird und um die Symmetrieachse 518 gedreht wird. Das untere Stirnende 705 des entsprechenden Werkzeugs ist konusförmig ausgeführt, wodurch eine Linienberührung 707 mit der dem Blechteil 713 abgewandten oberen Stirnseite des Matrizenabschnitts 701 in Fig. 12A erfolgt. Diese Linienberührung ist hier auf der linken Seite der Symmetrieachse zu sehen, wandert aber bei Drehung des Werkzeugs ringförmig um die Symmetrieachse 718 herum. Bei diesem Beispiel wird die Matrize in einer zylindrischen Aufnahme eines Führungsteils 788 mit etwas radialem Spiel aufgenommen. Dieses Spiel ist erforderlich, weil (wie bei allen anderen entsprechenden Beispielen) das Ausüben einer lokalen Kraft K, die sich ringförmig um die Symmetrieachse 518 bewegt, zu einer leichten Verkippung des Matrizenabschnitts 701 bzw. des entsprechenden Werkzeugteils führt, und die Aufnahme des Führungsteils 788 muss diese leichte Verkippung zulassen. Andererseits sorgt das Führungsteil 788 für eine gute Ausrichtung des Matrizenabschnitts mit der mittleren Längsachse 518 des Befestigungselements, d.h. mit der Symmetrieachse.

Obwohl bei den Beispielen der Fig. 9A, 9B; 10A, 10B; 11A, 11B; und der Ausführung gemäß Fig. 12A, 12B das Befestigungselement sozusagen selbststanzend in das Blechteil eingebracht wird, könnte das Blechteil vorgelocht werden, wie bei den Beispielen der Fig. 1 bis 8. Die Werkzeuge der Fig. 1 bis 8 könnten dann auch zur Anbringung der Bolzenelemente in einer der Form des jeweiligen Bolzenelements angepassten Form verwendet werden. Ebenso könnten die Mutterelemente der Fig. 1 bis 8 oder damit vergleichbare Mutterelemente selbststanzend in das jeweilige Blechteil eingebracht werden.

Auch bei den Beispielen der Fig. 9A, 9B; 10A, 10B; 11A, 11B; und der Ausführungsform gemäß Fig. 12A, 12B kann das Werkzeug, das um die Symmetrieachse 518 gedreht wird, auch um die Schrägachse gedreht werden, wenn dies vorteilhaft erscheint.

Schließlich soll darauf hingewiesen werden, dass für das Blechteil alle Stahl- oder Aluminium- oder Magnesiumblechteile in Frage kommen, die Tiefziehqualitäten aufweisen, während für das Funktionselement etwas festere Werkstoffe verwendet werden.

Bei allen Beispielen und Ausführungsformen können auch als Beispiel für den Werkstoff der Funktionselemente alle Materialien genannt werden, die im Rahmen der Kaltverformung die Festigungswerte der Klasse 8 gemäß ISO-Standard oder höher erreichen, beispielsweise eine 35B2-Legierung gemäß DIN 1654. Die so gebildeten Befestigungselemente eignen sich u.a. für alle handelsüblichen Stahlwerkstoffe für ziehfähige Blechteile wie auch für Aluminium oder dessen Legierungen. Auch können Aluminiumlegierungen, insbesondere solche mit hoher Festigkeit, für die Funktionselemente benutzt werden, z.B. AlMg5. Auch kommen Funktionselemente aus höherfesten Magnesiumlegierungen wie bspw. AM50 in Frage.

## Patentansprüche

1. Verfahren zur Anbringung eines Befestigungselements (112) mit einem Kopfteil (114), mit einem rohrförmigen Nietabschnitt (116), der konzentrisch zu einer Symmetrieachse (118) des Befestigungselementes (112) bzw. eines Befestigungsabschnittes (120) des Befestigungselementes angeordnet ist und über eine sich in radialer Richtung erstreckende Anlagefläche (122) in den Kopfteil (114) übergeht, an ein vorgelochtes Blechteil (113), wobei der Nietabschnitt (116) durch das Loch (124) im Blechteil hindurchgeführt und der Nietabschnitt umgebördelt wird, wodurch das Blechteil im Bereich des Loches zwischen der Anlagefläche (122) und dem umgebördelten Nietabschnitt (116') geklemmt wird, wobei
der Kopfteil (114) des Befestigungselements (112) in einen Ausschnitt (126) eines ersten Werkzeugs aufgenommen wird, **dadurch gekennzeichnet,**
**dass** ein eine Matrizenform zur fortschreitenden Umbördelung des Nietabschnitts aufweisendes zweites Werkzeug (130) in einer zur Symmetrieachse (118) des Befestigungselements koaxialen Stellung gebracht wird und mit einem zur Symmetrieachse geneigten und um die Symmetrieachse gedrehten dritten Werkzeug (160) auf eine der Matrizenform abgewandte Stirnseite des zweiten Werkzeugs (130) gedrückt wird, wobei eine relative axiale Zustellbewegung (136) zwischen dem ersten den Kopfteil aufnehmenden Werkzeug (128) und dem dritten das zweite Werkzeug (130) mitbewegende Werkzeug (160) vorgenommen wird, bis der Nietabschnitt (116) vollständig umgebördelt ist (116').

2. Verfahren nach Anspruch 1,
**dadurch gekennzeichnet,**
**dass** das zweite Werkzeug in einer kreiszylindrischen Aufnahme eines Führungsteils gehalten und mit etwas radialem Spiel geführt wird.

3. Verfahren nach Anspruch 2,
**dadurch gekennzeichnet,**
**dass** das Führungsteil auf das Blechteil zu vorgespannt ist und zumindest im Endstadium der Umbördelung des Nietabschnitts als Niederhalter für das Blechteil dient und dieses gegen die Stirnseite des ersten Werkzeugs klemmt.

4. Verfahren nach einem der Ansprüche 1 bis 3,
**dadurch gekennzeichnet,**
**dass** das dritte Werkzeug ein zylindrisches Stirnende aufweist, das ebenfalls in der kreiszylindrischen Aufnahme des Führungsteils angeordnet ist und von dieser geführt wird.

5. Verfahren nach einem der Ansprüche 1 bis 4,
**dadurch gekennzeichnet,**
**dass** das Stirnende des dritten Werkzeugs, das auf die der Matrizenform abgewandten Stirnseite des zweiten Werkzeugs drückt, eine Konusform aufweist, wodurch das dritte Werkzeug eine zumindest im Wesentlichen linienartige Berührung mit der Stirnseite des zweiten Werkzeugs bildet, wobei diese Berührungslinie sich mindestens vorwiegend auf einer Seite der Symmetrieachse befindet und sich bei Drehung des dritten Werkzeugs um die Symmetrieachse herum bewegt.

6. Verfahren nach einem der Ansprüche 1 bis 5,
**dadurch gekennzeichnet,**
**dass** bei der Umbördelbewegung Verdrehsicherungsmerkmale, die am Befestigungselement angebracht sind, beispielsweise im Bereich des Nietabschnitts und/oder der Anlagefläche und/oder am Übergang vom Nietabschnitt in die Anlagefläche, in Eingriff mit dem Blechteil gebracht werden.

7. Verfahren nach einem der Ansprüche 1 bis 6,
**dadurch gekennzeichnet,**
**dass** die relative axiale Zustellbewegung durch Bewegung des dritten Werkzeugs auf das zweite Werkzeug und das Befestigungselement zu bewirkt wird.

8. Verfahren nach einem der vorhergehenden Ansprüche 1 bis 7,
**dadurch gekennzeichnet,**
**dass** das dritte Werkzeug nicht nur um die Symmetrieachse des Befestigungselements gedreht wird, sondern gleichzeitig um die Neigungsachse, die durch die geneigte Stellung des zweiten Werkzeugs definiert ist.

9. Verfahren nach einem der vorhergehenden Ansprüche 1 bis 8,
**dadurch gekennzeichnet,**
**dass** das vorgelochte Blechteil mit einem das Loch umgebenden, konusförmigen Rand versehen wird, dass der Nietabschnitt von der Seite des vorstehenden konusförmigen Randes durch das Loch hindurch gesteckt wird, und dass der Nietabschnitt durch die Umbördelung den Ringraum ausfüllt, der auf der dem Kopfteil des Befestigungselements abgewandten Seite des Blechteils im Bereich des konusförmigen Randes vorgesehen ist, so dass das umgelegte Nietbördel zumindest im Wesentlichen nicht über die dem Kopfteil des Befestigungselements abgewandten Seite des Blechteils vorsteht.

10. Verfahren nach Anspruch 9,
**dadurch gekennzeichnet,**
**dass** der konusförmigen Rand des Blechteils bei der Umbördelung des Nietabschnitts mindestens teilweise flach gepresst wird

11. Verfahren nach einem der vorhergehenden Ansprüche 1 bis 10,
**dadurch gekennzeichnet,**
**dass** die sich radial erstreckende Anlagefläche um den rohrförmigen Nietabschnitt herum eine axiale Vertiefung und/oder eine radiale Vertiefung aufweist, und dass bei der Umbördelung des Nietabschnitts das Material des Blechteils in diese Vertiefung hinein gedrückt wird und dort durch die Umbördelung des Nietabschnitts eingeklemmt wird.

12. Verfahren nach einem der vorhergehenden Ansprüche 1 bis 11,
**dadurch gekennzeichnet,**
**dass** der das Befestigungselement aufnehmende Ausschnitt des ersten Werkzeugs im Vergleich zu dem Kopfteil des Befestigungselements so bemessen ist, dass die Anlagefläche unterhalb der dem Blechteil zugewandten Stirnseite des ersten Werkzeugs zurückversetzt wird, wobei bei der Umformung des Nietabschnitts ein Aufnahmeraum für den konusförmigen Randbereich des Loches im Blechteil vorgesehen wird.

13. Verfahren nach Anspruch 12,
**dadurch gekennzeichnet,**
**dass** ein ringförmiger Aufnahmeraum für den Nietbördel dadurch gebildet wird, dass der Ausschnitt über eine Konusfläche in die genannte Stirnseite des ersten Werkzeugs übergeht.

14. Verfahren nach Anspruch 13,
**dadurch gekennzeichnet,**
das der eingeschlossene Konuswinkel der Konusfläche kleiner ist als der des konusförmigen Randbereichs des Blechteils.

15. Verfahren zur Anbringung eines Befestigungselements (512), mit einem Kopfteil (514) mit einem rohrförmigen Nietabschnitt, der konzentrisch zu einer Symmetrieachse (518) des Befestigungselementes bzw. eines Befestigungsabschnittes (520) des Befestigungselementes angeordnet ist und über eine sich in radialer Richtung erstreckende Anlagefläche (522) in den Kopfteil (514) übergeht, an ein Blechteil (513),
**dadurch gekennzeichnet,**
**dass** das Blechteil (513) auf den vorstehenden Nietabschnitt des in einer Matrize (502) gehaltenen Befestigungselements angeordnet wird, dass eine Nietmatrize (502') auf der dem Nietabschnitt (516) abgewandten Seite des Blechteils koaxial zur Symmetrieachse (518) angeordnet und durch das Ausüben einer lokalen Kraft an der dem Nietabschnitt abgewandten Stirnseite der Nietmatrize (502') und Bewegung dieser lokalen Kraft in Kreisen um die mittlere Symmetrieachse (518) herum bei gleichzeitiger Durchführung einer relativen axialen Zustellbewegung (536) zwischen dem die Kraft ausübenden Werkzeug (703) und der Matrize (502), der Nietabschnitt (516) durch das Blechteil hindurch bei Erzeugung eines Loches gedrückt wird und anschließend umgebördelt wird, wodurch das Blechteil (513) im Bereich des Loches zwischen der Anlagefläche (522) und dem umgebördelten Nietabschnitt (516') geklemmt wird.

16. Vorrichtung zur Anbringung eines Befestigungselements (112) mit einem Kopfteil (114), mit einem rohrförmigen Nietabschnitt (116), der konzentrisch zu einer Symmetrieachse (118) des Befestigungselementes (112) bzw. eines Befestigungsabschnittes (120) des Befestigungselementes angeordnet ist und über eine sich in radialer Richtung erstreckende Anlagefläche (122) in den Kopfteil (114) übergeht, an ein vorgelochtes Blechteil (113), wobei der Nietabschnitt (116) durch das Loch (124) im Blechteil hindurch führbar und der Nietabschnitt umbördelbar ist, wodurch das Blechteil im Bereich des Loches zwischen der Anlagefläche (122) und dem umgebördelten Nietabschnitt (116') klemmbar ist, wobei die Vorrichtung ein erstes Werkzeug mit einem Ausschnitt (126) zur Aufnahme des Kopfteils (114) des Befestigungselements (112) vorgesehen ist;
**dadurch gekennzeichnet,**
**dass** ein zweites eine Matrizenform zur fortschreitenden Umbördelung des Nietabschnitts aufweisendes Werkzeug (130) vorgesehen ist, das in einer zur Symmetrieachse (118) des Befestigungselements koaxialen Stellung angeordnet ist, und dass ein drittes Werkzeug (160) vorgesehen ist, das zur Symmetrieachse geneigt und um die Symmetrieachse drehbar ist, die auf eine der Matrizenform abgewandte Stirnseite des zweiten Werkzeugs (130) drückbar ist, wobei eine Einrichtung vorgesehen ist, die eine relative axiale Zustellbewegung (136) zwischen dem ersten den Kopfteil aufnehmenden Werkzeug (128) und dem dritten das zweite Werkzeug (130) mitbewegende Werkzeug (160) ermöglicht.

17. Vorrichtung nach Anspruch 16,
**dadurch gekennzeichnet,**
**dass** das zweite Werkzeug in einer kreiszylindrischen Aufnahme eines Führungsteils gehalten und mit etwas radialem Spiel geführt wird.

18. Vorrichtung nach Anspruch 17,
**dadurch gekennzeichnet,**
**dass** das Führungsteil auf das Blechteil zu vorgespannt ist und zumindest im Endstadium der Umbördelung des Nietabschnitts als Niederhalter für das Blechteil dient und dieses gegen die Stirnseite des ersten Werkzeugs klemmt.

19. Vorrichtung nach einem der Ansprüche 16 bis 19,
**dadurch gekennzeichnet,**
**dass** das dritte Werkzeug ein zylindrisches Stirnende aufweist, das ebenfalls in der kreiszylindrischen Aufnahme des Führungsteils angeordnet ist und von dieser führbar ist.

20. Vorrichtung nach einem der Ansprüche 16 bis 19,
**dadurch gekennzeichnet,**
**dass** das Stirnende des dritten Werkzeugs, das auf die der Matrizenform abgewandten Stirnseite des zweiten Werkzeugs drückt, eine Konusform aufweist, wodurch das dritte Werkzeug eine zumindest im Wesentlichen linienartige Berührung mit der Stirnseite des zweiten Werkzeugs bildet, wobei diese Berührungslinie sich mindestens vorwiegend auf einer Seite der Symmetrieachse befindet und sich bei Drehung des dritten Werkzeugs um die Symmetrieachse herum bewegt.

21. Vorrichtung nach einem der Ansprüche 16 bis 20,
**dadurch gekennzeichnet,**
**dass** die relative axiale Zustellbewegung durch Bewegung des dritten Werkzeugs auf das zweite Werkzeug und das Befestigungselement zu erfolgt.

22. Vorrichtung nach einem der vorhergehenden Ansprüche 16 bis 21, **dadurch gekennzeichnet,**
**dass** das dritte Werkzeug nicht nur um die Symmetrieachse des Befestigungselements drehbar ist, sondern gleichzeitig um die Neigungsachse, die durch die geneigte Stellung des zweiten Werkzeugs definiert ist.

23. Vorrichtung nach einem der vorhergehenden Ansprüche 16 bis 22,
**dadurch gekennzeichnet,**
**dass** der das Befestigungselement aufnehmende Ausschnitt des ersten Werkzeugs im Vergleich zu dem Kopfteil des Befestigungselements so bemessen ist, dass die Anlagefläche unterhalb der dem Blechteil zugewandten Stirnseite des ersten Werkzeugs zurückversetzt ist, wodurch bei der Umformung des Nietabschnitts ein Aufnahmeraum für den konusförmigen Randbereich des Loches im Blechteil vorsehbar ist.

24. Vorrichtung nach Anspruch 23,
**dadurch gekennzeichnet,**
**dass** ein ringförmiger Aufnahmeraum für den Nietbördel dadurch gebildet ist, dass der Ausschnitt über eine Konusfläche in die genannte Stirnseite des ersten Werkzeugs übergeht.

25. Vorrichtung nach Anspruch 24,
**dadurch gekennzeichnet,**
das der eingeschlossene Konuswinkel der Konusfläche kleiner ist als der des konusförmigen Randbereichs des Blechteils.

26. Vorrichtung zur Anbringung eines Befestigungselements (512), mit einem Kopfteil (514) mit einem rohrförmigen Nietabschnitt, der konzentrisch zu einer Symmetrieachse (518) des Befestigungselementes bzw. eines Befestigungsabschnittes (520) des Befestigungselementes angeordnet ist und über eine sich in radialer Richtung erstreckende Anlagefläche (522) in den Kopfteil (514) übergeht, an ein Blechteil (513), wobei eine Matrize (502) zur Halterung des Befestigungselements vorgesehen ist, dessen Nietabschnitt (516) aus der Matrize herausragt,
**dadurch gekennzeichnet,**
**dass** das Blechteil (513) auf den Nietabschnitt (516) des in einer Matrize (502) gehaltenen Befestigungselements platzierbar ist, dass ein zweites Werkzeug in Form einer Nietrnatrize (502') mit einer Matrizenform zur Umbördelung des Nietabschnitts auf der dem Nietabschnitt abgewandten Seite des Blechteils koaxial zur Symmetrieachse des Nietabschnitts und innerhalb einer Führung (788) vorgesehen ist, dass ein drittes Werkzeug (703) auf der der Matrizenform abgewandten Stirnseite des zweiten Werkzeugs vorgesehen ist und ausgelegt ist um eine lokale Kraft an der dem Nietabschnitt abgewandten Stirnseite der Nietmatrize (502') auszuüben und diese lokale Kraft in Kreisen um die mittlere Symmetrieachse (518) herum zu bewegen, und dass eine Einrichtung vorgesehen ist um eine relative axiale Zustellbewegung (536) zwischen dem die Kraft ausübenden dritten Werkzeug (505) und der Matrize (502) zu erzeugen wodurch der Nietabschnitt (516) durch das Blechteil unter Bildung eines Loches hindurch drückbar ist und anschließend umbördelbar ist und das Blechteil (513) im Bereich des Loches zwischen der Anlagefläche (522) und dem umgebördelten Nietabschnitt (516') klemmbar ist.

27. Vorrichtung nach einem der Ansprüche 16 bis 26,
**dadurch gekennzeichnet,**
**dass** sie in einer Art Säulenbohrmaschine eingebaut ist, um die relativen Bewegungen zu erreichen.

## Claims

1. A method for the attachment to a pre-holed sheet metal part (113) of a fastener element (112) comprising a head part (114) and a tubular rivet section (116) which is disposed concentric to an axis of symmetry (118) of the fastener element (112) or of a fastener section (120) of the fastener element and merges into the head part (114) via a contact surface (122) extending in a radial direction, wherein the rivet section (116) is passed through the hole (124) in the sheet metal part and the rivet section is beaded over, whereby the sheet metal part is clamped in the region of the hole between the contact surface (122) and the beaded over rivet section (116'),
wherein the head part (114) of the fastener element (112) is received in a cut-out (126) of a first tool,
**characterized in**
**that** a second tool (130) having a die button shape for the progressive beading over of the rivet section is brought into a position coaxial to the axis of symmetry (118) of the fastener element and is pressed by a third tool (160) inclined to the axis of symmetry and rotated about the axis of symmetry onto an end face of the second tool (130) remote from the die button shape, with a relative axial feed movement (136) being effected between the first tool (128) which receives the head part and the third tool (160) which co-moves the second tool (130) until the rivet section (116) has been completely beaded over (116').

2. A method according to claim 1,
**characterized in**
**that** the second tool is held in a circularly cylindrical recess of a guide part and is guided with some radial clearance.

3. A method according to claim 2,
**characterized in**
**that** the guide part is biased towards the sheet metal part and serves, at least in the end stage of the beading over of the rivet section, as a hold-down member for the sheet metal part and clamps the latter against the end face of the first tool.

4. A method according to one of the claims 1 to 3,
**characterized in**
**that** the third tool has a cylindrical end which is likewise arranged in the circularly cylindrical recess of the guide part and is guided by the latter.

5. A method according to one of the claims 1 to 4,
**characterized in**
**that** the end of the third tool which presses onto the end face of the second tool remote from the die button shape has a conical shape, whereby the third tool forms an at least substantially linear contact with the end face of the second tool, with this line of contact being located at least predominantly at one side of the axis of symmetry and moving around the axis of symmetry on rotation of the third tool.

6. A method according to one of the claims 1 to 5,
**characterized in**
**that**, during the beading over movement, features providing security against rotation which are attached to the fastener element, for example, are brought into engagement with the sheet metal part in the region of the rivet section and/or of the contact surface and/or or at the transition from the rivet section into the contact surface.

7. A method according to one of the claims 1 to 6,
**characterized in**
**that** the relative axial feed movement is brought about by movement of the third tool towards the second tool and the fastener element.

8. A method according to one of the preceding claims 1 to 7,
**characterized in**
**that** the third tool is not only rotated about the axis of symmetry of the fastener element but rather also simultaneously about the inclined axis which is defined by the inclined position of the second tool.

9. A method according to one of the preceding claims 1 to 8,
**characterized in**
**that** the pre-holed sheet metal part is provided with a conical rim surrounding the hole, in that the rivet section is pushed from the side of the projecting conical rim through the hole and in that the rivet section fills out, through the beading over operation, the ring space which is provided at the side of the sheet metal part remote from the head part of the fastener element in the region of the conical rim, so that the beaded over rivet bead at least substantially does not project beyond the side of the sheet metal part remote from the head part of the fastener element.

10. A method according to claim 9,
**characterized in**
**that** the conical rim of the sheet metal part is at least partly pressed flat during the beading over of the rivet section.

11. A method according to one of the preceding claims 1 to 10,
**characterized in**
**that** the radially extending contact surface around the tubular rivet section has an axial recess and/or a radial recess and in that, during the beading over of the rivet section, the material of the sheet metal part is pressed into said recess and is trapped there by the beading over of the rivet section.

12. A method according to one of the preceding claims 1 to 11,
**characterized in**
**that** the cut-out of the first tool which receives the fastener element is dimensioned in comparison to the head part of the fastener element such that the contact surface is set back below the end face of the first tool confronting the sheet metal part, with a receiving space for the conical rim region of the hole being provided in the sheet metal part during the re-shaping of the rivet section.

13. A method according to claim 12,
**characterized in**
**that** a ring-like receiving space for the rivet bead is formed in that the cut-out merges via a conical surface into the said end face of the first tool.

14. A method according to claim 13,
**characterized in**
**that** the included cone angle of the conical surface is smaller than that of the conical rim region of the sheet metal part.

15. A method for the attachment to a sheet metal part (513) of a fastener element (512) comprising a head part (514) and a tubular rivet section which is disposed concentric to an axis of symmetry (518) of the fastener element or of a fastener section (520) of the fastener element and merges via a contact surface (522) extending in a radial direction into the head part (514),
**characterized in**
**that** the sheet metal part (513) is arranged on the projecting rivet section of the fastener element held in a die button (502); in that a rivet die button (502') is arranged on the side of the sheet metal part remote from the rivet section (516) coaxial to the axis of symmetry (518) and is pressed through the sheet metal part while generating a hole and is subsequently beaded over (516') by the exertion of a local force on end face of the rivet die button (518) remote from the rivet section (516) and by a movement of this local force in circles around the central axis of symmetry (518) while simultaneously carrying out a relative axial feed movement (536) between the tool (703) exerting the force and the die button (502), whereby the sheet metal part (513) is clamped in the region of the hold between the contact surface (522) and the beaded over rivet section (516').

16. An apparatus for the attachment to a pre-holed sheet metal part (113) of a fastener element (112) comprising a head part (114) and a tubular rivet section (116) which is disposed concentric to an axis of symmetry (118) of the fastener element (112) or of a fastener section (120) of the fastener element and merges into the head part (114) via a contact surface (122) extending in a radial direction, wherein the rivet section (116) can be passed through the hole (124) in the sheet metal part and the rivet section can be beaded over, whereby the sheet metal part can be clamped in the region of the hole between the contact surface (122) and the beaded over rivet section (116'), wherein the apparatus is provided with a first tool having a cut-out (126) for the reception of the head part (114) of the fastener element (112),
**characterized in**
**that** a second tool (130) is provided having a die button shape for the progressive beading over of the rivet section which is arranged in a position coaxial to the axis of symmetry (118) of the fastener element and in that a third tool (160) is provided which is inclined to the axis of symmetry and can be rotated about the axis of symmetry which can be pressed onto an end face of the second tool (130) remote from the die button shape, with a device being provided which permits a relative axial feed movement (136) between the first tool (128) which receives the head part and the third tool (160) which co-moves the second tool (130).

17. An apparatus according to claim 16,
**characterized in**
**that** the second tool is held in a circularly cylindrical recess of a guide part and guided with some radial clearance.

18. An apparatus according to claim 17,
**characterized in**
**that** the guide part is biased towards the sheet metal part and serves, at least in the end stage of the beading over of the rivet section, as a hold-down member for the sheet metal part and clamps the latter against the end face of the first tool.

19. An apparatus according to one of the claims 16 to 19,
**characterized in**
**that** the third tool has a cylindrical end which is likewise arranged in the circularly cylindrical recess of the guide part and can be guided by the latter.

20. An apparatus according to one of the claims 16 to 19,
**characterized in**
**that** the end of the third tool which presses onto the end face of the second tool remote from the die button shape has a conical shape, whereby the third tool forms an at least substantially linear contact with the end face of the second tool, with this line of contact being located at least predominantly to one side of the axis of symmetry and moving around the axis of symmetry on rotation of the third tool.

21. An apparatus according to one of the claims 16 to 20,
**characterized in**
**that** the relative axial feed movement takes place by movement of the third tool towards the second tool and the fastener element.

22. An apparatus according to one of the preceding claims 16 to 21,
**characterized in**
**that** the third tool can not only be rotated about the axis of symmetry of the fastener element but rather also simultaneously about the inclined axis which is defined by the inclined position of the second tool.

23. An apparatus according to one of the preceding claims 16 to 22,
**characterized in**
**that** the cut-out of the first tool which receives the fastener element is so dimensioned in comparison to the head part of the fastener element that the contact surface is set back below the end face of the first tool confronting the sheet metal part, whereby a receiving space for the conical rim region of the hole can be provided in the sheet metal part during the re-shaping of the rivet section.

24. An apparatus according to claim 23,
**characterized in**
**that** a ring-like receiving space for the rivet bead is formed in that the cut-out merges via a conical surface into the said end face of the first tool.

25. An apparatus according to claim 24,
**characterized in**
**that** the included cone angle of the conical surface is smaller than that of the conical rim region of the sheet metal part.

26. An apparatus for the attachment to a sheet metal part (513) of a fastener element (512) comprising a head part (514) and a tubular rivet section which is disposed concentric to an axis of symmetry (518) of the fastener element or of a fastener section (520) of the fastener element and merges via a contact surface (522) extending in a radial direction into the head part (514), wherein a die button (502) is provided to hold the fastener element whose rivet section (516) projects out of the die button,
**characterized in**
**that** the sheet metal part (513) can be placed onto the rivet section (516) of the fastener element held in a die button (502); in that a second tool is provided in the form of a rivet die button (502') having a die button shape for the beading over of the rivet section on the side of the sheet metal part remote from the rivet section coaxial to the axis of symmetry of the rivet section and within a guide (788); in that a third tool (703) is provided on the end face of the second tool remote from the die button shape and is configured to exert a local force on the end face of the rivet die button (502') remote from the rivet section and to move this local force in circles around the central axis of symmetry (518); and in that a device is provided to generate a relative axial feed movement (536) between the third tool (505) exerting the force and the die button (502), whereby the rivet section (516) can be pressed through the sheet metal part while forming a hole and can subsequently be beaded over and the sheet metal part (513) can be clamped in the region of the hole between the contact surface (522) and the beaded over rivet section (516').

27. An apparatus according to one of the claims 16 to 26,
**characterized in**
**that** it is installed into a tool resembling a pillar drill in order to achieve the relative movements.

## Revendications

1. Procédé pour rapporter un élément de fixation (112) comprenant une partie formant tête (14), comprenant un tronçon formant rivet (116) de forme tubulaire, qui est agencé concentriquement à un axe de symétrie (118) de l'élément de fixation (112) ou respectivement d'un tronçon de fixation (120) de l'élément de fixation et qui se transforme dans la partie formant tête (114) via une surface d'appui (122) s'étendant en direction radiale, sur une pièce en tôle prépercée (113), dans lequel le tronçon formant rivet (116) est passé à travers le perçage (124) dans la pièce en tôle et le tronçon formant rivet est retroussé, grâce à quoi la pièce en tôle est coincée dans la région du perçage entre la surface d'appui (122) et le tronçon formant rivet (116') retroussé, dans lequel la partie formant tête (114) de l'élément de fixation (112) est reçue dans une découpe (126) d'un premier outil,
**caractérisé en ce que**
un second outil (130) qui comporte une forme en matrice pour procéder à un retroussement progressif du tronçon formant rivet est amené dans une position coaxiale à l'axe de symétrie (118) de l'élément de fixation et est poussé avec un troisième outil (160) incliné par rapport à l'axe de symétrie et tourné autour de l'axe de symétrie, contre une face frontale, détournée de la forme en matrice, du second outil (130), de sorte qu'on exécute un mouvement d'approche axiale relative (136) entre le premier outil (128) qui reçoit la partie formant tête et le troisième outil (160) qui entraîne conjointement le second outil (130), jusqu'à ce que le tronçon formant rivet (160) soit entièrement retroussé (116').

2. Procédé selon la revendication 1,
**caractérisé en ce que** le second outil est maintenu dans un logement cylindrique à base circulaire d'une pièce de guidage et est guidé avec un léger jeu radial.

3. Procédé selon la revendication 2,
**caractérisé en ce que** la pièce de guidage est précontrainte en direction de la pièce en tôle et sert, au moins dans un stade final du retroussement du tronçon formant rivet, d'organe de maintien vers le bas pour la pièce en tôle, et coince celle-ci contre la face frontale du premier outil.

4. Procédé selon l'une des revendications 1 à 3,
**caractérisé en ce que** le troisième outil comporte une extrémité frontale cylindrique, qui est également agencée dans le logement cylindrique à base circulaire de la pièce de guidage et qui est guidée par celui-ci.

5. Procédé selon l'une des revendications 1 à 4,
**caractérisé en ce que** l'extrémité frontale du troisième outil, qui pousse sur la face frontale, détourné de la forme en matrice, du second outil, présente une forme conique, grâce à quoi le troisième outil forme avec la face frontale du second outil un contact au moins sensiblement linéaire, et cette ligne de contact se trouve au moins principalement sur un côté de l'axe de symétrie et se déplace tout autour de l'axe de symétrie lors d'une rotation du troisième outil.

6. Procédé selon l'une des revendications 1 à 5,
**caractérisé en ce que** lors du mouvement de retroussement, des caractéristiques antirotation, qui sont ménagées sur l'élément de fixation, par exemple dans la région du tronçon formant rivet et/ou de la surface d'appui et/ou à la transition du tronçon formant rivet vers la surface d'appui, sont amenées en engagement avec la pièce en tôle.

7. Procédé selon l'une des revendications 1 à 6,
**caractérisé en ce que** le mouvement d'approche axiale relative est produit par déplacement du troisième outil vers le second outil et vers l'élément de fixation.

8. Procédé selon l'une des revendications précédentes 1 à 7,
**caractérisé en ce que** le troisième outil est tourné non seulement autour de l'axe de symétrie de l'élément de fixation, mais simultanément autour de l'axe d'inclinaison qui est défini par la position inclinée du second outil.

9. Procédé selon l'une des revendications précédentes 1 à 8,
**caractérisé en ce que** la pièce en tôle prépercée est dotée d'une bordure de forme conique qui entoure le perçage, **en ce que** le tronçon formant rivet est enfiché à travers le perçage depuis le côté de la bordure de forme conique en dépassement, et **en ce que** le tronçon formant rivet remplit du fait du retroussement l'espace annulaire qui est prévu sur le côté de la pièce en tôle détourné de la partie formant tête de l'élément de fixation, dans la région de la bordure de forme conique, de sorte que le retroussement de rivetage rabattu ne dépasse au moins sensiblement pas au-delà du côté de la pièce en tôle détourné de la partie formant tête de l'élément de fixation.

10. Procédé selon la revendication 9,
**caractérisé en ce que** la bordure de forme conique de la pièce en tôle est pressée au moins partiellement à plat lors du retroussement du tronçon formant rivet.

11. Procédé selon l'une des revendications précédentes 1 à 10,
**caractérisé en ce que** la surface d'appui qui s'étend radialement comporte tout autour du tronçon formant rivet de forme tubulaire un renfoncement axial et/ou un renfoncement radial, et **en ce que** lors du retroussement du tronçon formant rivet le matériau de la pièce en tôle est pressé en pénétration dans ce renfoncement et est coincé à cet endroit par le retroussement du tronçon formant rivet.

12. Procédé selon l'une des revendications précédentes 1 à 11,
**caractérisé en ce que** la découpe, qui reçoit l'élément de fixation, du premier outil présente, par comparaison à la partie formant tête de l'élément de fixation, des dimensions telles que la surface d'appui est en retrait au-dessous de la face frontale, tournée vers la pièce en tôle, du premier outil, et lors de la déformation du tronçon formant rivet il est prévu dans la pièce en tôle un espace de réception pour la région de bordure de forme conique du perçage.

13. Procédé selon la revendication 12,
**caractérisé en ce qu'**un espace de réception de forme annulaire pour le retroussement de rivetage est formé par le fait que la découpe se transforme via une surface conique pour donner la face frontale précitée du premier outil.

14. Procédé selon la revendication 13,
**caractérisé en ce que** l'angle inclus de la surface conique est inférieur à celui de la région de bordure de forme conique de la pièce en tôle.

15. Procédé pour rapporter un élément de fixation (512), comprenant une partie formant tête (514) dotée d'un tronçon formant rivet de forme tubulaire, lequel est agencé concentriquement à un axe de symétrie (518) de l'élément de fixation ou d'un tronçon de fixation (520) de l'élément de fixation, et se transforme dans la partie formant tête (514) via une surface d'appui (522) qui s'étend en direction radiale, sur une pièce en tôle (513),
**caractérisé en ce que**
la pièce en tôle (513) est agencée sur le tronçon formant rivet en dépassement de l'élément de fixation maintenu dans une matrice (502), **en ce qu'**une matrice de rivetage (502') est agencée sur le côté de la pièce en tôle détournée du tronçon formant rivet (516), coaxialement à l'axe de symétrie (518), et en exerçant une force locale sur la face frontale, détournée du tronçon formant rivet, de la matrice de rivetage (502') et déplacement de cette force locale suivant des cercles autour de l'axe de symétrie médian (518) en exécutant simultanément un mouvement d'approche axiale relative (536) entre l'outil (703) qui exerce cette force et la matrice (502), le tronçon formant rivet (516) est forcé à travers la pièce en tôle en produisant un perçage, et est ensuite retroussé, grâce à quoi la pièce en tôle (513) est coincée dans la région du perçage entre la surface d'appui (522) et le tronçon formant rivet (516') retroussé.

16. Appareil pour rapporter un élément de fixation (112) comprenant une partie formant tête (114), comprenant un tronçon formant rivet (116) de forme tubulaire, qui est agencé concentriquement à un axe de symétrie (118) de l'élément de fixation (112) ou d'un tronçon de fixation (120) de l'élément de fixation et se transforme dans la partie formant tête (112) via une surface d'appui (122) qui s'étend en direction radiale, sur une pièce en tôle prépercée (113), dans lequel le tronçon formant rivet (116) est susceptible d'être passé à travers le perçage (124) dans la pièce en tôle et le tronçon formant rivet est susceptible d'être retroussé, grâce à quoi la pièce en tôle est susceptible d'être coincée dans la région du perçage entre la surface d'appui (122) et le tronçon formant rivet (116') retroussé, l'appareil étant pourvu d'un premier outil avec une découpe (126) pour la réception de la partie formant tête (114) de l'élément de fixation (112) ;
**caractérisé en ce qu'**il est prévu un second outil (130), qui comporte une forme en matrice pour un retroussement progressif du tronçon formant rivet et qui est agencé dans une position coaxiale à l'axe de symétrie (118) de l'élément de fixation, et **en ce qu'**il est prévu un troisième outil (160), qui est incliné par rapport à l'axe de symétrie et capable de rotation autour de l'axe de symétrie et qui peut être poussé sur un côté frontal détourné de la forme en matrice du second outil (130), et dans lequel il est prévu des moyens qui permettent un mouvement d'approche axiale relative (136) entre le premier outil (128) qui reçoit la partie formant tête, et le troisième outil (160) qui déplace avec lui le second outil (130).

17. Appareil selon la revendication 16,
**caractérisé en ce que** le second outil est maintenu dans un logement cylindrique à base circulaire d'une pièce de guidage, et est guidé avec un léger jeu radial.

18. Appareil selon la revendication 17,
**caractérisé en ce que** la pièce de guidage est précontrainte sur la pièce en tôle et, au moins dans le stade final du retroussement du tronçon formant rivet, elle sert d'élément de maintien vers le bas pour la pièce en tôle et coince celle-ci contre la face frontale du premier outil.

19. Appareil selon l'une des revendications 16 à 19,
**caractérisé en ce que** le troisième outil comporte une extrémité frontale cylindrique, qui est également agencée dans le logement cylindrique à base circulaire de la pièce de guidage et qui est susceptible d'être guidée par celle-ci.

20. Appareil selon l'une des revendications 16 à 19,
**caractérisé en ce que** l'extrémité frontale du troisième outil qui pousse sur la face frontale, détournée de la forme en matrice, du second outil, présente une forme conique en raison de quoi le troisième outil forme avec la face frontale du second outil un contact au moins sensiblement linéaire, et cette ligne de contact se trouve au moins principalement sur un côté de l'axe de symétrie et se déplace tout autour de l'axe de symétrie lors de rotation du troisième outil.

21. Appareil selon l'une des revendications 16 à 20,
**caractérisé en ce que** le mouvement d'approche axiale relative a lieu par mouvement d'un troisième outil vers le second outil et vers l'élément de fixation.

22. Appareil selon l'une des revendications précédentes 16 à 21,
**caractérisé en ce que** le troisième outil est capable de rotation non seulement autour de l'axe de symétrie de l'élément de fixation, mais simultanément autour de l'axe d'inclinaison qui est défini par la position inclinée du second outil.

23. Appareil selon l'une des revendications précédentes 16 à 22,
**caractérisé en ce que** la découpe, qui reçoit l'élément de fixation, du premier outil présente par comparaison à la partie formant tête de l'élément de fixation des dimensions telles que la surface d'appui est en retrait au-dessous de la face frontale, tournée vers la pièce en tôle, du premier outil, grâce à quoi lors de la déformation du tronçon formant rivet, il est prévisible qu'il se forme un espace de réception pour la région de bordure de forme conique du perçage dans la pièce en tôle.

24. Appareil selon la revendication 23,
**caractérisé en ce qu'**un espace de réception de forme annulaire pour le retroussement de rivetage est formé du fait que la découpe se transforme via une surface conique pour donner la face frontale précitée du premier outil.

25. Appareil selon la revendication 24,
**caractérisé en ce que** l'angle inclus de la surface conique est inférieur à celui de la région de bordure de forme conique de la pièce en tôle.

26. Appareil pour rapporter un élément de fixation (512), comprenant une partie formant tête (514) avec un tronçon formant rivet de forme tubulaire, qui est agencé concentriquement à un axe de symétrie (518) de l'élément de fixation ou d'un tronçon de fixation (520) de l'élément de fixation et qui se transforme dans la partie formant tête (514) via une surface d'appui (522) s'étendant en direction radiale, sur une pièce en tôle (513), dans lequel il est prévu une matrice (502) pour le maintien de l'élément de fixation dont le tronçon formant rivet (516) dépasse hors de la matrice,
**caractérisé en ce que**
la pièce en tôle (513) est susceptible d'être placée sur le tronçon formant rivet (516) de l'élément de fixation maintenu dans une matrice (502), **en ce qu'**il est prévu un second outil sous la forme d'une matrice de rivetage (502') avec une forme en matrice pour le retroussement du tronçon formant rivet sur le côté, détourné du tronçon formant rivet, de la pièce en tôle coaxialement à l'axe de symétrie du tronçon formant rivet et à l'intérieur d'un guidage (788), **en ce qu'**il est prévu un troisième outil (703) sur le côté frontal, détourné de la forme en matrice, du second outil, et conçu pour exercer une force locale sur la face frontale, détournée du tronçon formant rivet, de la matrice de rivetage (502'), et pour déplacer cette forme locale suivant des cercles tout autour de l'axe de symétrie médian (518), et **en ce qu'**il est prévu des moyens pour produire un mouvement d'approche axiale relative (536) entre le troisième outil (505) exerçant la force et la matrice (502), grâce à quoi le tronçon formant rivet (516) peut être pressé à travers la pièce en tôle en formant un perçage, et est ensuite susceptible d'être retroussé, et la pièce en tôle (513) est susceptible d'être coincée dans la région du perçage entre la surface d'appui (522) et le tronçon formant rivet retroussé (516').

27. Appareil selon l'une des revendications 16 à 26,
**caractérisé en ce qu'**il est intégré dans une sorte de machine perceuse à colonne, afin de d'obtenir les mouvements relatifs.
